# EUROPEAN PATENT APPLICATION

(11) **EP 4 649 805 A1**
(43) Date of publication of application: **19.11.2025**
(21) Application number: 25179393.1
(22) Date of filing: 28.05.2025
(51) Int. Cl.: A01C 7/04, A01C 7/20

(54) **SYSTEM AND METHOD FOR SEED METERING AND SEED ORIENTATION**

(30) Priority: 17.05.2024 US 202463648876 P; 02.05.2025 US 202519196817
(71) Applicant: Deere & Company, Moline, IL 61265 (US)
(72) Inventor: Galbraith, Jeff B., Nevada, 50201 (US); Sobotka, Cody J., Nevada, 50201 (US)
(74) Representative: Reddie & Grose LLP

(57) **Abstract**

One or more techniques and/or systems are disclosed for orienting a seed in a seed meter of a seed planter (100). The seed meter (200) can be configured to collect and singulate seeds from a seed pool (206), and orient the seeds in the preferred orientation before ejecting the seeds to the planting system. A series of seed cells (204) in a metering element (202) can help singulate seeds as the metering element (202) rotates. The metering element (202) rotates to a first flip stage, which rotates seeds to a tip up orientation. Continuing rotation to a second flip stage (212), where the seeds are rotated to a tip down orientation. A seed exit (214) can eject seeds in the preferred orientation to a planting system.

## Description

### CROSS-REFERENCE TO RELATED APPLICATIONS

This application claims priority to U.S. Patent Application Serial No. 63/648,876, filed on May 17, 2024. The entirety of the aforementioned application is incorporated herein by reference.

### BACKGROUND

In an agricultural setting, crops are typically planted using large planting machines that open rows, deposit seeds, and close the row behind the seed. A series of planters can be used together in a row planter to plant several rows at each pass. Seeds are typically metered to a desired spacing to keep plants at a desired distance from each other for optimizing growth and production. A seed metering system can collect seeds from a storage hopper and send seeds to a planter at the desired intervals. However, many systems randomly drop seeds into an opened trough, without regard for orientation of the seed. Some seeds will produce healthier and more productive plants when deposited into the ground in a specific orientation.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for orienting a seed in a desired position for planting. That is, seed orientation during planting can have an effect on resulting plant growth and overall plant production. For example, orienting a seed in a tip (e.g., pedicle) down orientation, with flat sides oriented parallel to planting row may be a preferred orientation. A seed meter can be configured to collect and singulate seeds from a seed pool, and orient the seeds in the preferred orientation before ejecting the seeds to the planting system.

In one implementation, a system for orienting a seed in a seed meter of a seed planter can comprise a metering element that comprises a plurality of evenly spaced metering cells. In this implementation, the respective metering cells can be sized and shaped to operably receive a single seed. Further, a tip down orientation stage can be configured to rotate the seed in respective cells to a tip down orientation. The seed meter can also comprise a seed exit stage that is configured to release the seed from the metering element in the tip down orientation.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Fig. 1 is a component diagram illustrating one implementation of an example vehicle and system that may implement one or more systems and methods described herein.
Fig. 2 is a component diagram illustrating one implementation of one or more portions of an example seed orientation meter that may implement one or more systems and methods described herein.
Fig. 3 illustrates an exemplary, non-limiting implementation of a portion of a seed meter according to one or more aspects.
Fig. 4 illustrates an exemplary, non-limiting implementation of a portion of a seed meter according to one or more aspects
Fig. 5 illustrates various exemplary, non-limiting implementations of one or more aspects of the seed meter.
Fig. 6 is a component diagram illustrating one implementation of one or more portions of a system described herein.
Fig. 7 is a component diagram illustrating example implementations of one or more portions of one or more systems and methods described herein.
Fig. 8 is a component diagram illustrating example implementations of one or more portions of one or more systems and methods described herein.
Fig. 9 is a component diagram illustrating one implementation of one or more portions of a system described herein.
Fig. 10 is a component diagram illustrating one implementation of one or more portions of a system described herein.
Fig. 11 is a component diagram illustrating one implementation of one or more portions of a system described herein.
Fig. 12 is a component diagram illustrating alternate example implementations of one or more portions of one or more systems described herein.
Fig. 13 is a component diagram illustrating one implementation of one or more portions of a system described herein.
Fig. 14 illustrates an exemplary, non-limiting implementation of a row unit with a seed meter and seed delivery device according to one or more aspects.
Fig. 15 illustrates an exemplary, non-limiting implementation of a row unit with a seed meter and seed delivery device according to one or more aspects.
Fig. 16 illustrates an exemplary, non-limiting implementation of a row unit with a seed meter and seed delivery device according to one or more aspects.
Fig. 17 illustrates an exemplary, non-limiting implementation of a row unit with a seed meter and seed delivery device according to one or more aspects.
Fig. 18 illustrates an exemplary, non-limiting implementation of a row unit with a seed meter and seed delivery device according to one or more aspects.
Fig. 19 illustrates an exemplary, non-limiting implementation of a seed meter and a seed delivery device according to various aspects.
Fig. 20 illustrates an exemplary, non-limiting implementation of a seed meter and a seed delivery device according to various aspects.
Fig. 21 illustrates an exemplary, non-limiting implementation of a seed meter and a seed delivery device according to various aspects.
Fig. 22 illustrates an exemplary, non-limiting implementation of a seed meter and a seed delivery device according to various aspects.
Fig. 23 illustrates an exemplary, non-limiting implementation of a seed meter and a seed delivery device according to various aspects.
Fig. 24 illustrates an exemplary, non-limiting implementation of a seed meter and a portion of a seed delivery device according to one or more aspects.
Fig. 25 illustrates an exemplary, non-limiting implementation of a seed meter and a portion of a seed delivery device according to one or more aspects.
Fig. 26 illustrates an exemplary, non-limiting implementation of a seed meter and a portion of a seed delivery device according to one or more aspects.
Fig. 27 illustrates an exemplary, non-limiting implementation of a seed meter and a portion of a seed delivery device according to one or more aspects.
Fig. 28 illustrates an exemplary, non-limiting implementation of an interface between a seed meter and a seed delivery device according to one or more aspects.
Fig. 29 illustrates an exemplary, non-limiting implementation of a seed meter according to various aspects.
Fig. 30 illustrates an exemplary, non-limiting implementation of a seed meter according to various aspects.
Fig. 31 illustrates an exemplary, non-limiting implementation of a seed meter according to various aspects.
Fig. 32 illustrates an exemplary, non-limiting implementation of a seed meter according to various aspects.
Fig. 33 illustrates an exemplary, non-limiting implementation of a seed meter depicted without a lid.
Fig. 34 illustrates an exemplary, non-limiting implementation of a seed meter depicted without a lid.
Fig. 35 illustrates an exemplary, non-limiting implementation of a seed meter depicted without a lid.
Fig. 36 illustrates an exemplary, non-limiting implementation of a seed meter without a hopper and lid.
Fig. 37 illustrates an exemplary, non-limiting implementation of a seed meter without a hopper and lid.
Fig. 38 illustrates an exemplary, non-limiting implementation of a seed meter without a hopper and lid.
Fig. 39 illustrates an exemplary, non-limiting implementation of a seed meter without a hopper and lid.
Fig. 40 illustrates an exemplary, non-limiting implementation of a seed meter without a hopper and lid.
Fig. 41 illustrates an exemplary, non-limiting implementation of a portion of a seed meter according to various aspects.
Fig. 42 illustrates an exemplary, non-limiting implementation of a portion of a seed meter according to various aspects.
Fig. 43 illustrates an exemplary, non-limiting operation of a portion of a seed meter according to various aspects.
Fig. 44 illustrates an exemplary, non-limiting operation of a portion of a seed meter according to various aspects.
Fig. 45 illustrates an exemplary, non-limiting operation of a portion of a seed meter according to various aspects.
Fig. 46 illustrates an exemplary, non-limiting operation of a portion of a seed meter according to various aspects.
Fig. 47 illustrates an exemplary, non-limiting operation of a portion of a seed meter according to various aspects.
Fig. 48 illustrates an exemplary, non-limiting operation of a portion of a seed meter according to various aspects.
Fig. 49 illustrates an exemplary, non-limiting operation of a portion of a seed meter according to various aspects.
Fig. 50 illustrates an exemplary, non-limiting operation of a portion of a seed meter according to various aspects.
Fig. 51 illustrates an exemplary, non-limiting operation of a portion of a seed meter according to various aspects.
Fig. 52 illustrates an exemplary, non-limiting operation of a portion of a seed meter according to various aspects.
Fig. 53 illustrates an exemplary, non-limiting operation of a portion of a seed meter according to various aspects.
Fig. 54 illustrates an exemplary, non-limiting operation of a portion of a seed meter according to various aspects.
Fig. 55 illustrates an exemplary, non-limiting operation of a portion of a seed meter according to various aspects.
Fig. 56 illustrates an exemplary, non-limiting operation of a portion of a seed meter according to various aspects.
Fig. 57 illustrates an exemplary, non-limiting operation of a portion of a seed meter according to various aspects.
Fig. 58 illustrates an exemplary, non-limiting operation of a portion of a seed meter according to various aspects.
Fig. 59 illustrates an exemplary, non-limiting operation of a portion of a seed meter according to various aspects.
Fig. 60 illustrates an exemplary, non-limiting operation of a portion of a seed meter according to various aspects.
Fig. 61 illustrates an exemplary, non-limiting operation of a portion of a seed meter according to various aspects.
Fig. 62 illustrates an exemplary, non-limiting operation of a portion of a seed meter according to various aspects.
Fig. 63 illustrates an exemplary, non-limiting operation of a portion of a seed meter according to various aspects.
Fig. 64 illustrates an exemplary, non-limiting operation of a portion of a seed meter according to various aspects.
Fig. 65 illustrates an exemplary, non-limiting operation of a portion of a seed meter according to various aspects.
Fig. 66 illustrates an exemplary, non-limiting operation of a portion of a seed meter according to various aspects.
Fig. 67 illustrates an exemplary, non-limiting operation of a portion of a seed meter according to various aspects.
Fig. 68 illustrates an exemplary, non-limiting operation of a portion of a seed meter according to various aspects.
Fig. 69 illustrates an exemplary, non-limiting operation of a portion of a seed meter according to various aspects.

### DETAILED DESCRIPTION

The claimed subject matter is now described with reference to the drawings. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

As described herein, one or more systems and methods can be devised that provide for planting seeds in a furrow in a desired orientation. For example, it may be desirable to orient a seed with its pedicel (e.g., embryo or germ) down and, in the case of corn, with flat sides of the kernel oriented toward the sides of a furrow. Studies have shown improved seed germination and plant growth characteristics associated with seeds planted in this orientation. For a planting or seeding operation, seeds are typically stored in a storage vessel on a planter or seeder in a random orientation. The seeds are directed from storage to a row seeder via tubes and further directed toward a furrow created by the row seeder. Conventional implementations drop the seed randomly into the furrow and hope for the best. Various techniques and systems are described herein orient the seeds such that they are placed into the furrow in the desired orientation.

In one aspect, a seed metering apparatus (also referred to as a seed meter or seed metering device) is configured to receive a seed from storage (in a potentially random orientation) and output the in the desired orientation. A seed metering apparatus may singulate seeds (e.g., select seeds one at a time) and space the singulated seeds apart with a desired spacing (e.g., based on seeder speed, meter rate, etc.) for planting. In some implementations, the seed metering apparatus is configured to orient individual seeds such that when they are output in the desired orientation (e.g., pedicel down, flats to the side, etc.). When planted in the desired orientation, seeds typically germinate and/or emerge from the soil faster. In addition, the leaves of the crop are oriented to grow between rows instead of along the rows. Faster plant production (e.g., faster progress through germination, emergence, and growth) leads to healthier plants. Leaf orientation between rows allows for greater sun light on the leaves, while providing shade between rows to inhibit potential nuisance plants and to retain soil moisture.

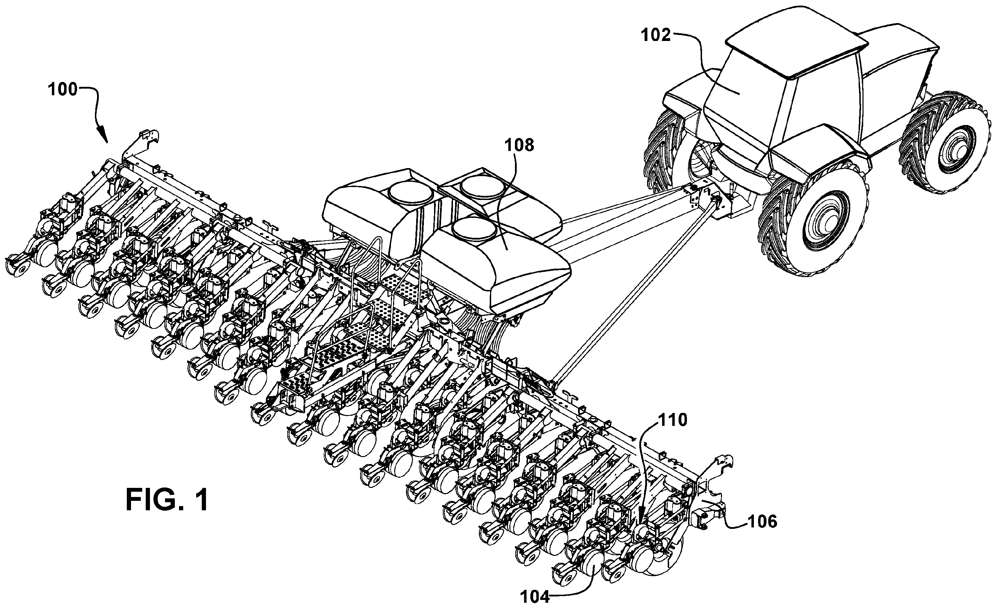

Turning now to the drawings, Fig. 1 illustrates an exemplary, non-limiting implementation of a work vehicle and associated equipment that may utilize the techniques and systems described herein. As shown in Fig. 1, an exemplary row crop planter 100 is pulled by a tractor 102 during operation. The row crop planter 100 includes a plurality of row seeders 104. In the exemplary implementation of Fig. 1, the plurality of row seeders 104 are arranged in parallel along a support bar 106. In other implementations, the plurality of row seeders may have a staggered arrangement. The row crop planter 100 also includes one or more seed storage vessels 108. Although Fig. 1 shows a single seed storage vessel 108, it is to be appreciated that, in other implementations, each row seeder 104 may include a separate seed storage vessel 108. As the row crop planter 100 is pulled across a field surface, each row seeder 104 opens a trench (or furrow), deposits a seed from the seed storage vessel 108 into the trench, and, in some cases, closes the trench. As a result, operation of the row crop planter 100 produces a series of generally parallel trenches that are each seeded with multiple seeds along the length of the trench. Further, the row crop planter may include one or more seed meters 110, like one described herein, which is disposed between the storage vessel 108 (e.g., either single bulk storage or individual, separate storage) and the row seeder 104 to meter individual seeds as appropriate for the operation.

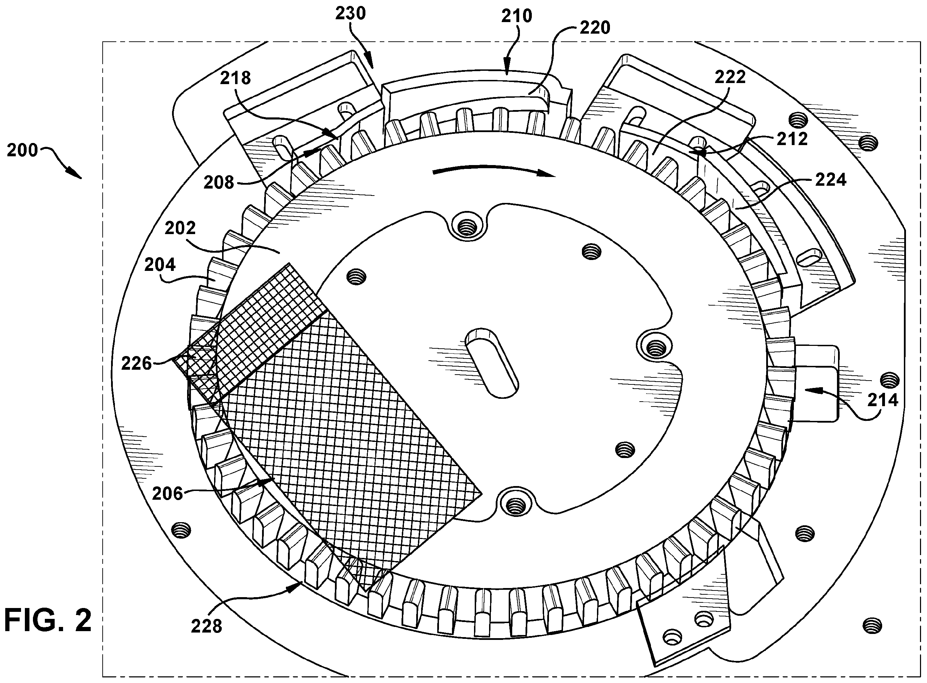

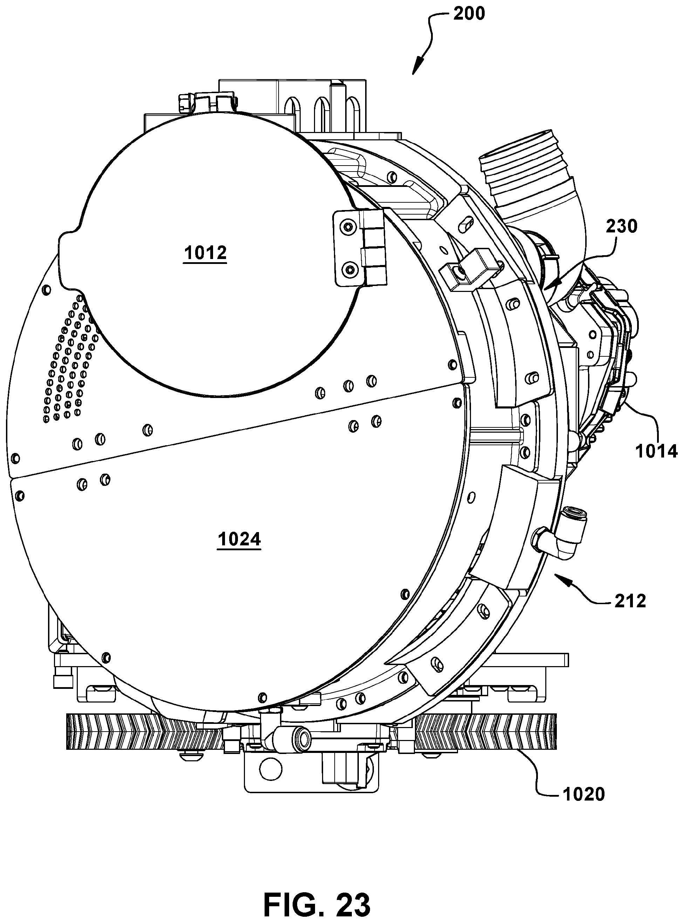

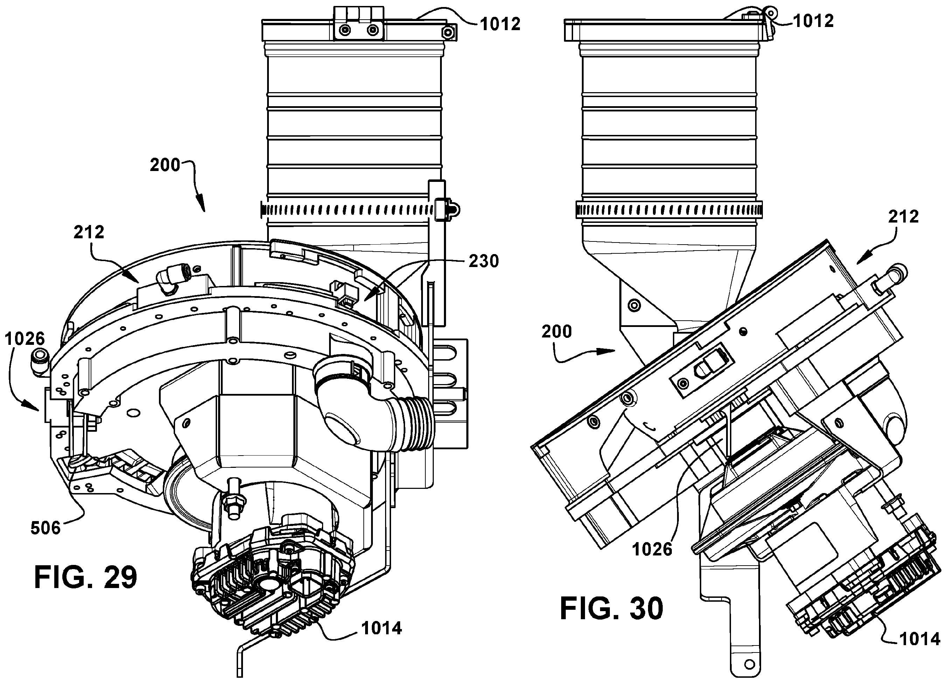

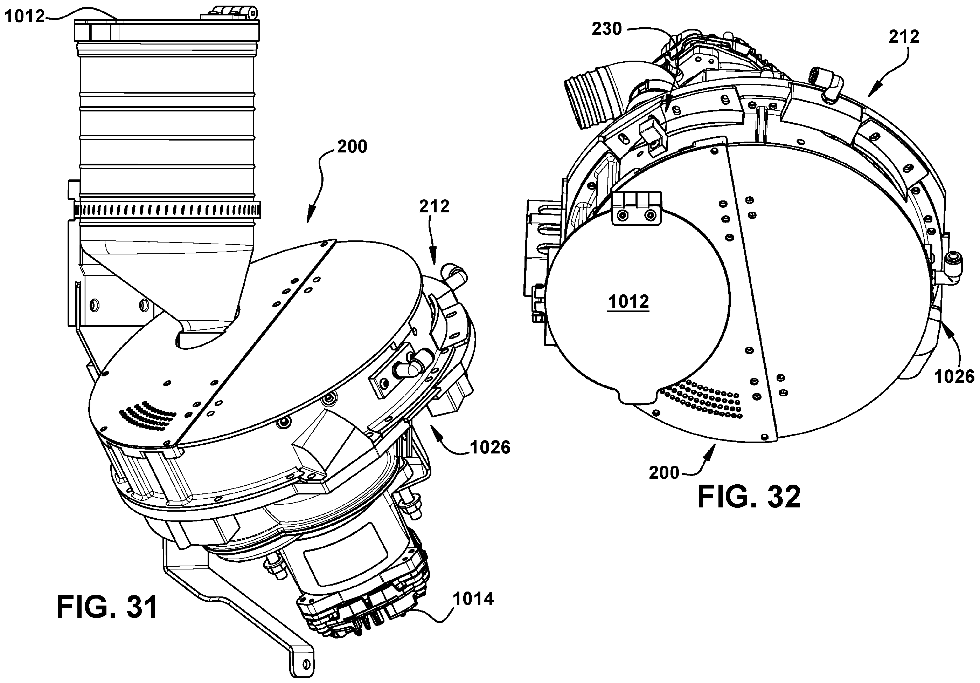

Fig. 2 depicts a portion of an exemplary, non-limiting seed meter 200 according to various aspects. Seed meter 200 may also be referred to herein as a seed orienting meter 200 or meter 200. Fig. 2 illustrates seed meter 200 without some components to illustrate features thereof. Figs. 29-32 depict the seed meter 200 as a complete assembly according to various examples. Fig. 2 illustrates the seed meter 200 without a lid 1024 (see Fig. 23) and outer side wall 201 (see Fig. 30).

As shown in Fig. 2, seed meter 200 includes a metering element 202 having a plurality of peripherally disposed metering cells 204. The metering cells 204 are sized and shaped to receive an individual target seed (e.g., seed for the target operation, such as a corn seed for corn planting) from a seed pool 206. For example, the size and shape of the respective cells 204 may be configured to merely allow a single corn seed to be disposed therein in a first orientation, with the flat sides of the corn kernel lying parallel to the sides of the cell 204. That is, the cell walls can be configured to be slightly larger than a width of the seed between the flat walls, but smaller than the width of the seed between the rounded walls of the seed. In this way, the seeds should fall into the cells 204 with the flat walls parallel to the walls of the cell 204. In some implementations, the seed pool 206 can hold seeds, such as received from a storage vessel (e.g. storage 108 and/or hopper 1012), to be deposited into the cells 204 during operation. For instance, during operation, the metering element 202 rotates and individual seeds can be deposited from the seed pool 206 to respective cells 204. In Fig. 2, the cells 204 are shown open at an outer diameter of the metering element 202. It is to be appreciated that the cells 204 are enclosed at the outer diameter by outer side wall 201 except at portions that will become apparent below.

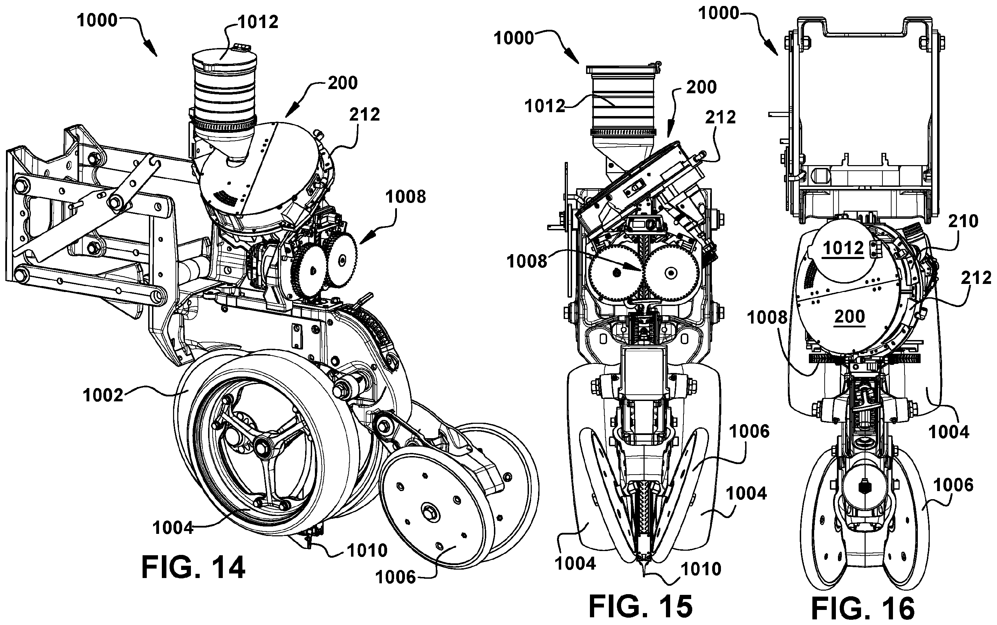

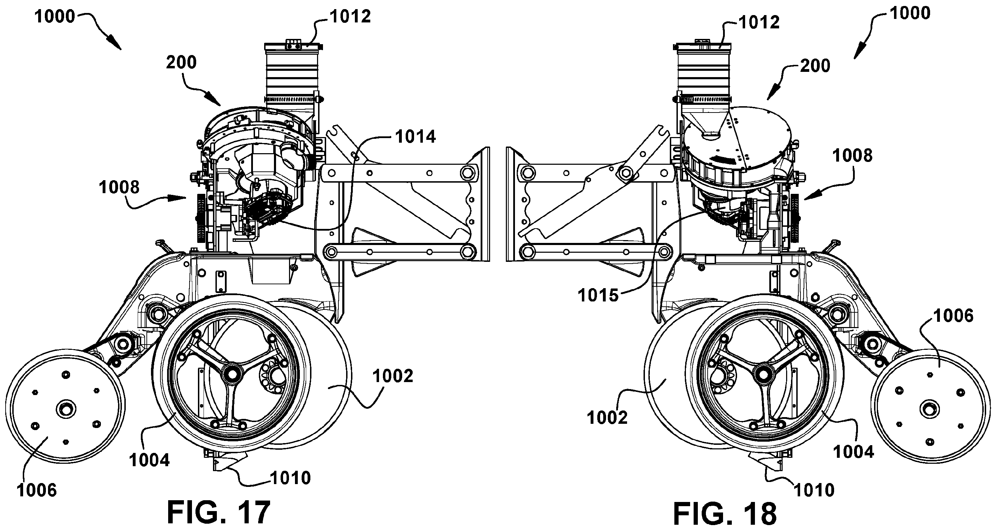

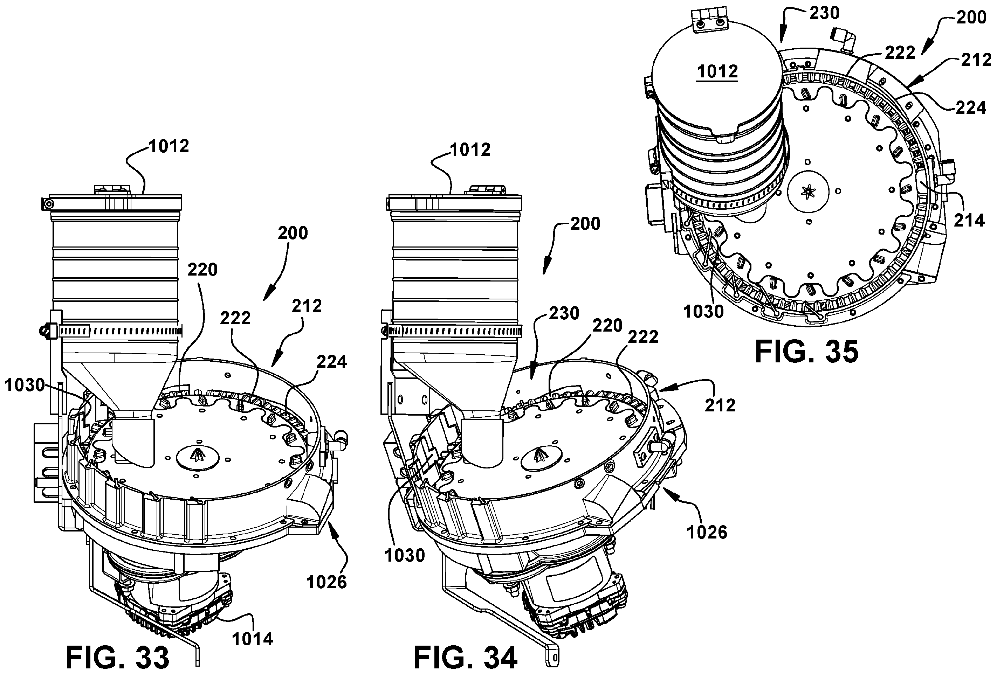

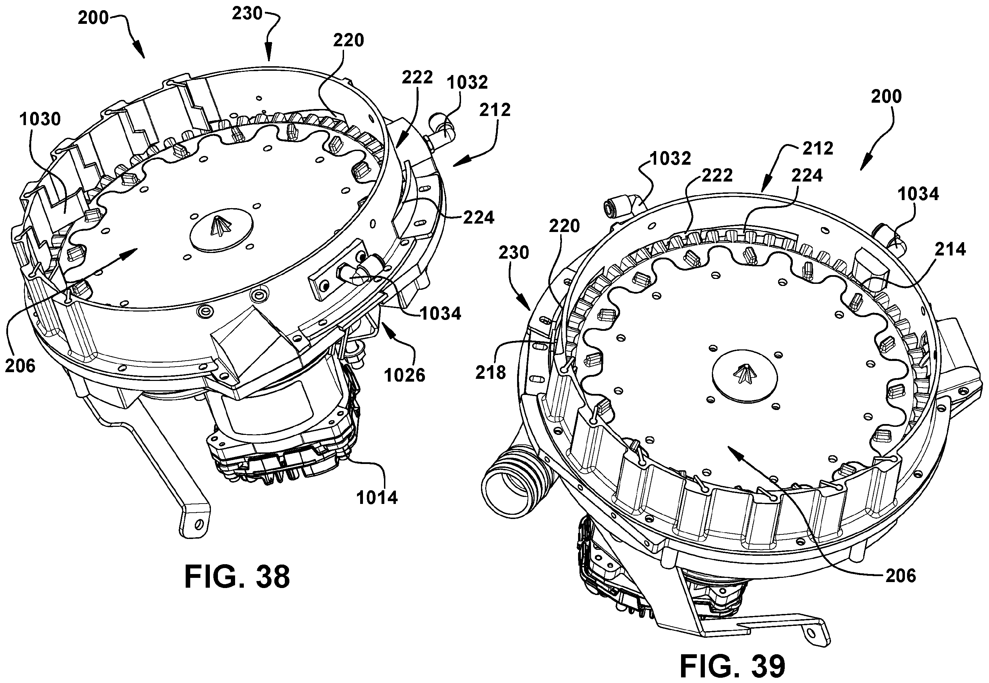

In some implementations, an agitator (e.g., mechanical agitator) can be coupled with or positioned in the seed pool 206 to help the seeds into the cells 204. In some implementations, the metering element 202 can have a generally conical surface plate that slopes down from a center toward the cells 204 to facilitate seed movement into the cells 204. In some implementations, the metering element 202 may be oriented at an angle relative to horizontal to concentrate seeds into an elongated seed pool 206 (see, for example, Figs. 14-18). In some implementations, fill brushes, flaps or paddles can be positioned near the perimeter of the metering element to hold seed and further elongate the seed pool. For example, Figs. 33-42 depict paddles 1030. In some implementations, air can be used to agitate the seed pool and encourage seeds to fall into cells 204.

A seed may have a natural tendency to fall into the cell 204 with its tip (e.g., pedicel) oriented up. As noted above, this orientation may be opposite of a desired orientation for when the seed exits the meter for deposition into a furrow. As described below, as the metering element 202 rotates (e.g., clockwise), the seed is subjected to a series of features in a floor 228 (e.g., or floor plate) of the metering element 228 and/or along an outer diameter of seed meter 200 that align the seed in a tip down orientation in each cell 204 prior to delivering the seed from the meter 200. The floor 228 is generally disposed behind or beneath the cells 204.

In some implementations, a singulation component 226, such as a brush, paddle or the like, can be positioned proximate (e.g., prior to, or upstream from) a first stage selector portion 208. The singulation component 226 may be configured to facilitate singulation by moving seeds that are doubled up in a cell (e.g., by brushing away extra seed to next cell, out of the meter, or back to the seed pool 206). In some implementations, the singulation component 226 can comprise an air jet that may be directed to the surface of the cell 204 (e.g. along the opening at an upper portion of the cell 204) to eject one of the seeds in a double-filled cell. The air jet can eliminate one of the seeds by pushing it back to the seed pool 206, moving it to an empty cell 204, or even out of the metering element 202.

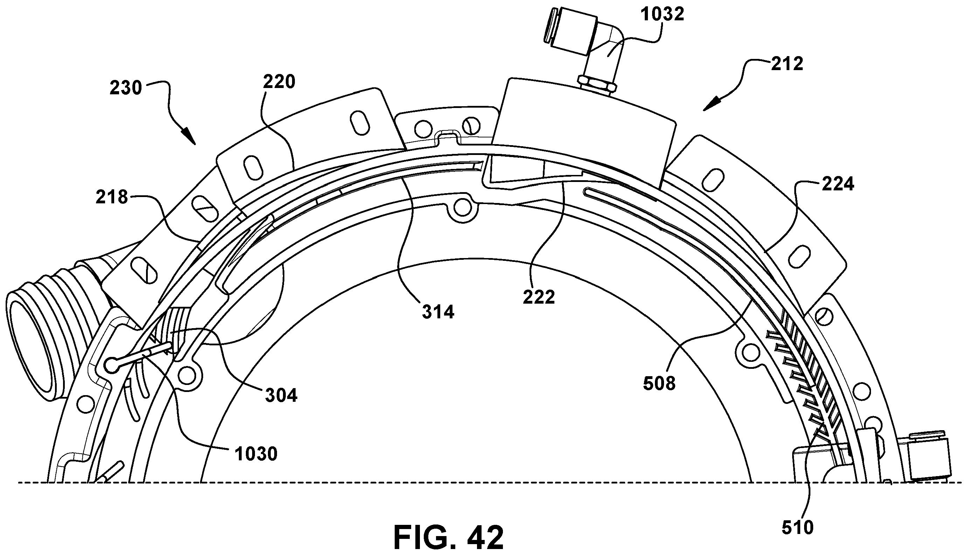

In some examples, a vacuum can be applied to a bottom side (e.g., beneath the floor 228) of the metering element 202 and used to pull the seed into a cell 204. For example, grooves (e.g., 1104, 1106 of Fig. 42-44) can be disposed in the floor plate 228 of the metering element 202, under the cells 204, and a vacuum can be applied where the grooves (e.g., holes) are exposed to the cell 204. Further, some portions of the floor plate 228 may not have the grooves. In this way, application of the vacuum to the seeds as they travel across the floor plate 228, can be alternated on and off, allowing the seeds to be drawn into the cells 204 where appropriate, and allowed to rotate freely where appropriate.

As noted above, seed meter 200 can position seeds in a desired orientation. A first stage 230 of seed meter 200 is configured to dispose seeds into a tip-up orientation. The first stage 230 (or tip-up orientation stage 230) includes a first stage selector portion or section 208 and a first stage flip portion or section 210). The first stage selector portion 208 includes a first wall or ridge 218 configured to "select" or allow seeds already disposed in a tip-up orientation to bypass the first stage selector portion 208 without further manipulation. Accordingly, all or most seeds entering the first stage 230 in a tip-up orientation remain in the tip-up orientation after the first stage selector portion 208. When a seed falls into the cell 204 in a tip-down orientation from the fill zone 206, features in the first stage selector portion 208 move the seed towards the first wall or ridge 218. As described in greater detail below, the features engage the tip of the seed and deflect the tip outward (e.g. toward an outer diameter of the seed meter 200 or outer portion of the cell 204). A seed deflected in this manner by the first stage selector portion 208 engages a second ridge 220 of the first stage flip portion 210 when transitioning from the first stage selector portion 208 to the first stage flip portion 210. In the first stage flip portion 210, the seed is flipped over to a tip-up orientation. The second ridge 220 of the first stage flip portion 210, in some implementations, may be a ramp that engages the tip of the seed (deflected previously by the first stage selector portion 208) and flip it upward (e.g. rotates the seed) as the cell 204 rotates (through rotation of the metering element 202) along the second ridge 220. A seed in a tip-up orientation prior to the first stage 230 will pass the first stage selector portion 208 and the first stage flip portion 210 undisturbed.

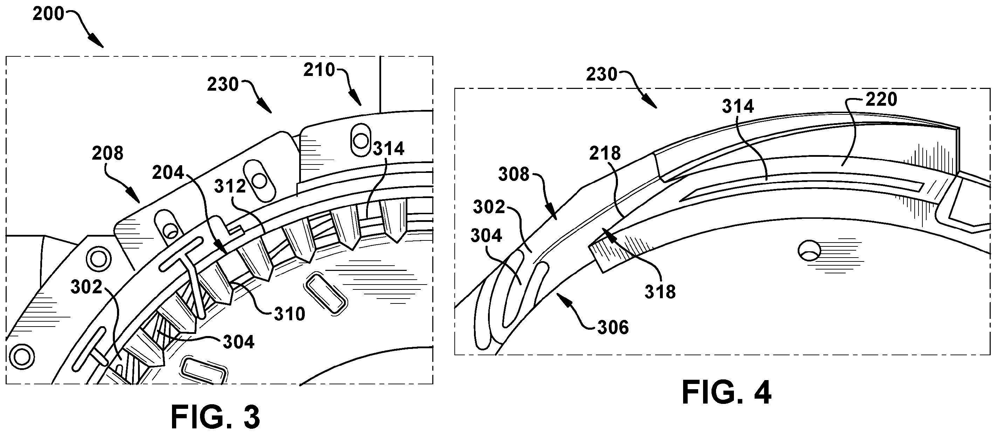

Turning to Figs. 3 and 4, aspects of the first stage 230 are depicted in greater detail. A floor plate 302 of the orienting meter 200 (which may form a portion of floor 228) includes a series of grooves 304 in the first stage selector portion 208. The floor plate 302, for example, forms a bottom surface or floor of cells 204. As shown, particularly in Fig. 4, the grooves 304 are oriented such that they extend or curve radially outward in a clockwise direction from an inner portion 306 to an outer portion 308 of the floor plate 302. The inner portion 306 may also be referred to or generally correspond to an inner diameter (of cell 204, metering device 202, floor plate 302, and/or meter 200). The outer portion 308 may also be referred to herein or generally correspond to an outer diameter (of cell 204, metering device 202, floor plate 302, and/or meter 200). It is to be appreciated that while the grooves 304 are depicted as generally arcuate, the grooves 304 may have other arrangements (e.g. linear). A vacuum can be applied to the backside of the floor plate 302 to create a vacuum at the surface of the grooves 304.

A tip of a seed, in a tip-down orientation, is drawn into the groove 304 and translate along the path of the groove 304 from the inner portion 306 to the outer portion 308 of the floor plate 302 as the cell 204 rotates clockwise. The tip of the seed follows the groove path and begins its rotation from a tip-down to a tip-up orientation as the metering element 202 rotates clockwise over the floor plate 302. Seeds already disposed in a tip-up orientation may bypass the grooves 304 and continue in the tip-up orientation along the floor plate 302 as the metering element 202 rotates. In some implementations, compressed air (e.g., from above) can be used to push seed tips in contact with the floor plate 302 to the outer portion 308. In other implementations, other mechanical interactions move tips in contact with the floor plate 302 to the outer portion 308.

At the beginning of the first stage selector portion 208, seeds disposed at the outer portion 308 in a generally tip-down orientation and will have their base portion (e.g., non-tip end) fall into a trough 318. In this arrangement, the smaller tip portion of the seed is not supported by the first wall or ridge 218 as the seed translates along the first stage selector portion 208 of the first stage 230. From a top view, the first wall or ridge 218 extends from the inner portion 306 outward radially toward the outer portion 308 (in the clockwise direction), but only far enough to support the relatively wide portion of the seed opposite the tip when the seed is disposed in tip-up orientation within the cell 204. Accordingly, the seed can fall into the trough 318 when disposed in the tip-down orientation. In some implementations, the width of the first wall or ridge 218 between the inner portion 306 and outer portion 308 can be adjustable to accommodate different shaped or sized seeds. In some implementations, an adjustment can be done before a planting operation begins for differently sized seeds. In some implementations, adjustment can be done automatically while planting, such as using an automated system, including a controller (e.g. processor and/or memory executing computer-executable instructions) and actuators that adjust cell sizes and/or width of the wall or ridge 218.

In these examples, a supported, tip-up seed does not drop down into the trough 318. Instead, seeds already in a tip-up orientation can pass through the first stage selector portion 208 without additional manipulation. If a seed falls into trough 318 at the beginning of the first stage selector portion 208, however, dimensions and features of the trough 318 allow the seed to translate outward radially. For instance, features and dimensions of the trough 318 provide enough space for the tip of a tip-down seed to rotate outward from a tip-down orientation to a tip-horizontal orientation while flat portions (e.g. sides) of the seeds remain oriented parallel with the cell walls 310. Particularly, the flat portions remain parallel with cell walls 310 disposed between adjacent cells 204. Further, features and dimensions of the trough 318 are such that a seed is not provided with enough room to otherwise allow the tip-horizontal seed to translate excessively outward from the cell 204. For instance, a portion of the seed remains engaged with cell walls 310 and the seed is therefore propelled forward by the rotating meter disc (e.g. metering element 202). In some exemplary cases, the length of the seed exceeds the width of the seed. Therefore, in these examples, the tip of the seed will protrude beyond the outermost diameter of the cell 204 when the seed is in a tip-horizontal orientation. Accordingly, the tip of the tip-horizontal seed engages the second ridge 220 in the first stage flip portion 210. With the seed sufficiently engaged with cell walls 310 (i.e. wall between cells), the tip rides up the second ridge 220 as the meter rotates until it appropriately falls into the cell 204 tip-up. In some implementations, a vacuum can be applied through a slit 314 to keep the seeds in the cell 204 and help the base of the seed stay in a down position with the tip up.

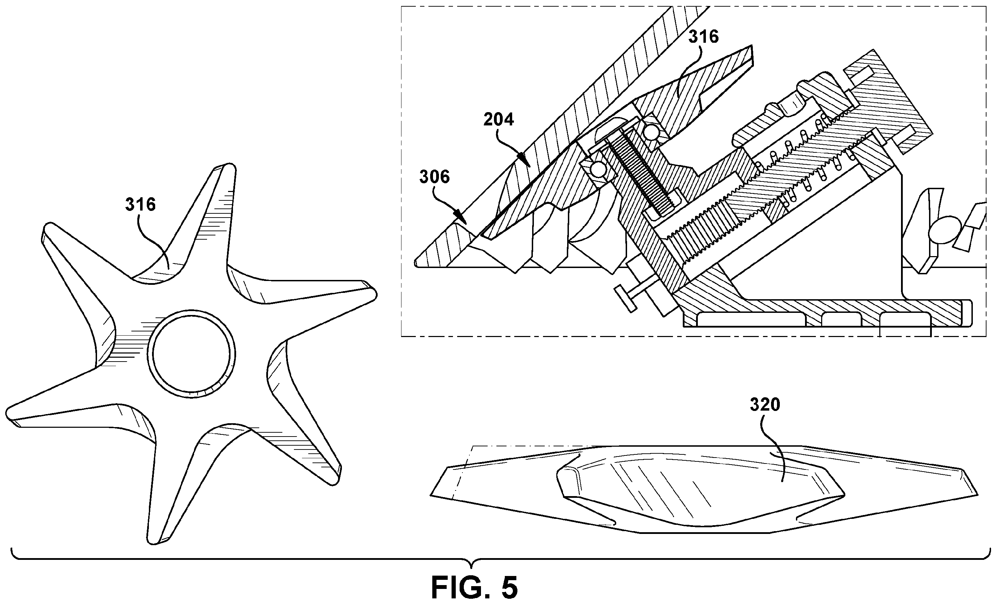

In some implementations, one or more features may be utilized to help keep the seed disposed in the cell 204 during the orientation flip of the first stage flip portion 210. For example, a rigid or semi-flexible hood or cover can be disposed on the cells 204 at the first stage selector portion 208 and/or first stage flip portion 210 of the seed meter 200. As another example, a vertical or partially-vertical wheel 316 (see Fig. 5) can be disposed proximate to the inner portion 306. The wheel 316 can comprise spokes 320 that are complementary to the cells 204 (e.g., align in timing) to encourage seeds to complete the rotation and drop back down into the cavity of the cell 204. As another example, a vertical or partially-vertical air jet or air knife can be disposed to send air toward the inner portion 306 to encourage seeds to complete the rotation and drop back down into the cavity of the cell 204. Additionally, as an example, the ramp locations of the first stage flip portion 210 can be disposed at or near a 12 o'clock position when the seed meter 200 is disposed vertically. In this way, gravity may also provide an assist in seed rotation and settling of the seed into the cavity of the cell 204.

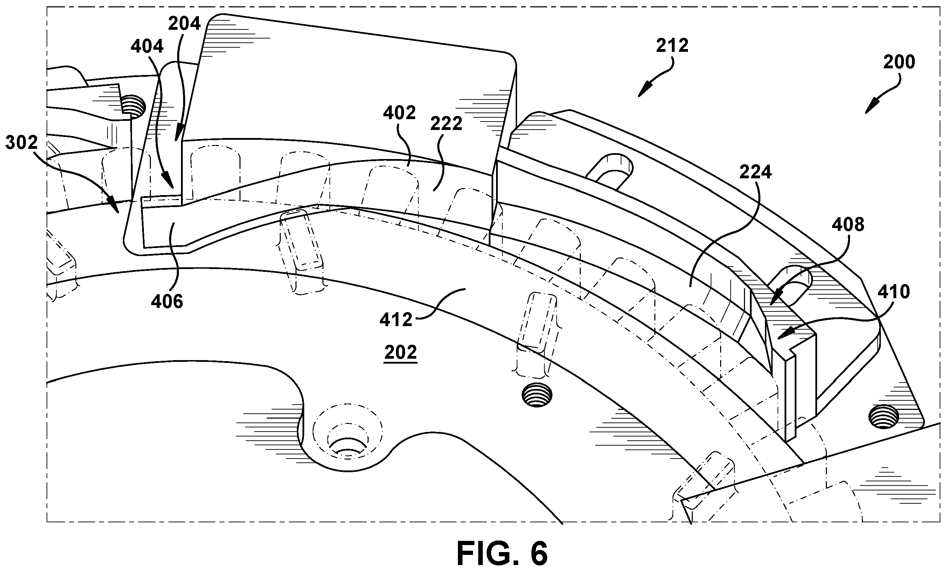

Referring back to Fig. 2 and with additional reference to Fig. 6, a portion of the seed meter 200 is depicted. The portion shown in Fig.6 is where the seed can be rotated to a tip-down orientation from a tip-up orientation. The previous section (e.g. the first stage 230) attempted to align all of the seeds in a uniform tip-up orientation so that the following section is more effective in attempting to orient all of the seeds in a tip-down orientation, which may be a preferred planting position (e.g., tip down, flat sides out). For example, first orienting a high percentage of seeds in a common orientation can allow a second feature to more effectively change the remaining seeds to the preferred exit orientation. In other implementations, a first section, such as first stage 230 including flip portion 210, could be configured to arranged all or most of the seeds in a tip-down orientation and a second section, such as a second stage or second stage flip portion 212, is configured to orient any remaining seeds in a tip-down disposition.

As an example, adjustment to the first ridge 218 can be done during a planting operation. For example, one or more sensors upstream of an adjustable wall or ridge 218 can be used to determine characteristics that determine a preferred adjustment such as seed shape, width, length, orientation, or the like. In these examples, an adjustment of the wall or ridge 218 is then timed such that movement of the wall or ridge 218 to the preferred position is complete before the sensed seed passes over the wall or ridge 218. In some implementations, this sequence can be replicated two or more times to orient any remaining seeds in a tip-down orientation.

In Fig. 6, a second stage flip portion 212 (e.g., tip-down orientation stage) is depicted. The second stage flip portion includes a third wall or ridge 222 and a fourth wall or ridge 224. The third ridge 222 and the fourth ridge 224 may have ramp configurations. The cells 204 are shown ghosted in Fig. 6 to better illustrate underlying features of the second stage 212.

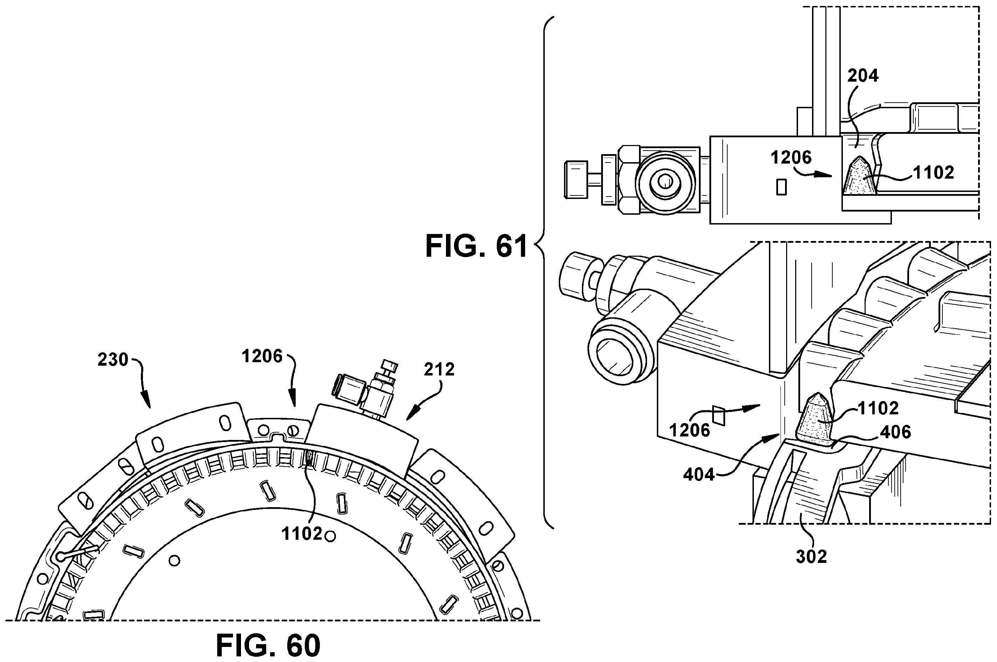

The third wall 222 includes an inlet 404 disposed at an upstream end of the third wall 222. For example, as shown in Fig. 61, inlet 404 may be a depression. For example, a base 406 of the inlet 404 is disposed at a lower position than the floor 302 of meter 200, such that a seed in the cell 204 will drop down to base 406. As the seeds are disposed in a tip-up orientation following the first stage 230, the bottom or the wide, rounded (e.g., heavier) portion of the seed drops to base 406 below the level of the cell 204 (e.g. below the level of floor 302) at the inlet 404 at the beginning of the third ridge 222. The tip portion of the seed remains inside the cell 204.

In this implementation, the cells and features of the meter are dimensioned such that space is provided for the bottom of the seed to rotate outward radially from the center of the metering element 202 as the seed drops down and as the metering element 202 rotates clockwise. Dimensions and the shape of the base 406 provide enough space for the tip of a tip-up seed to rotate from tip-up to a tip-horizontal orientation while seed flats remain oriented parallel with the cell walls 310 of cell 204. Accordingly, a portion of the seed remains engaged with cell walls 310 and the seed is therefore propelled forward by the rotating meter disc. In some examples, the length of the seed exceeds the width of the seed. Therefore, for example, the base of the seed protrudes beyond the outermost diameter of the cell 204 when the seed is in a tip-horizontal orientation. In this orientation, the base of the tip-horizontal seed engages the third wall or ridge 222. With the seed sufficiently supported by cell walls 310, the base of the seed follows a slope of third ridge 222 as the meter rotates. The base of the seed will translate up as the seed follows the slope and, thus, rotate. The seed continues to follow the slope until rotation is complete.

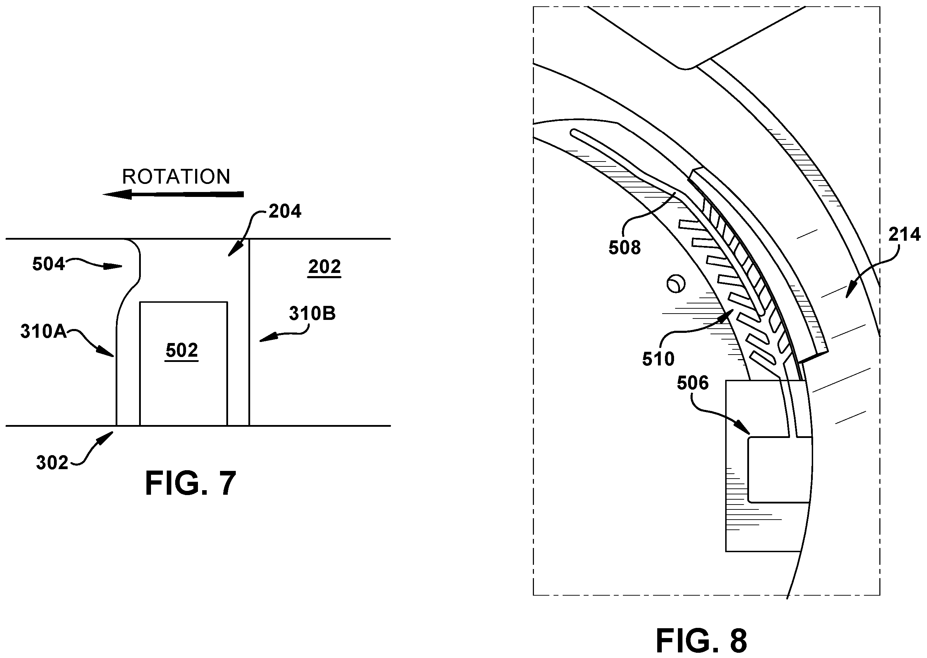

In some implementations, as the seed travels up the third ridge 222 (e.g. as the metering element 202 rotates clockwise), the side of the seed nearest the metering element 202 center is pulled down towards the meter floor 302 by vacuum. A vacuum can be applied to a slit 508 (see Figs. 8 and 64-67) in a meter floor 412 under the cell 204 to hold the tip of the seed in contact with the meter floor 412 during the remainder of seed rotation. Further, as the seed base travels up the slope of the third ridge 222, the seed transfers to the fourth ridge 224, which continues the upward translation of the seed base. For example, the third ridge 222 increases in height from upstream to downstream and the height increase continues with the fourth ridge 224.

The seed base continues to travel up the increasing height of the third and fourth ridges 222, 224 while the tip of the seed remains in the cell 204. The tip of the seed can subsequently drop into the cell 204 thus completing the flip of the seed to a tip-down orientation. Further, in some implementations, an air knife 402 (e.g., an opening through which air is expressed) can be disposed along the third ridge 222 and/or fourth ridge 224. The air knife 402 can urge the base of the seed to complete its rotation to the tip-down orientation. In a further example, the air knife 402 can be located proximate to the floor of the third or fourth ridges 222, 224 to accommodate smaller/shorter seeds. Additionally, a radial distance of the slope of the third and fourth ridges, 222, 224 relative to a center of the metering element 202 reduces clockwise through eh second stage 212. This reduction encourages the seed inward towards the metering element 202 center and back into cell 204, which further facilitates the rotation of the seed into the tip-down orientation. Further, a curve portion 410 at a terminal portion of the fourth ridge wall may bring the radial distance of the fourth ridge 224 into alignment with an inner surface of the outer side wall 201 of the seed meter 200.

For example, in summary, after all seeds are in a tip-up orientation, the seeds then go through the secondary flip operation (e.g., second stage 212) that includes another series of ramps to flip the seeds into a tip-down orientation. After the seeds are in a tip-down orientation, they transition to an exit of the meter 200. It should be noted that this device can function with or without the assistance of vacuum and/or air pressure in the metering assembly. In one implementation, as described above, vacuum can be introduced into the plate itself and used to hold the seed slightly as it is manipulated by the ramp surfaces.

Figs. 7 and 8 illustrate portions of the seed meter 200 that provide for desired seed exit characteristics (e.g., tip-down, flat sides oriented parallel to a planting row line, etc.). In Fig. 7, a metering cell 204 of the metering element 202 includes side walls 310 that are sized and shaped to place the seed 502 in position with the flats of the seed parallel to the walls 310 of cell 204 that are orthogonal to a circumference of the metering element 202. The seed, as shown, may rest on the floor plate 302. That is, floor plate 302, in some portions during rotation, may form the bottom of the cell 204. Fig. 7, in particular, depicts cell 204 along a radial cross-section. Side wall 310a is disposed at an inner portion of the metering device 202 and the side wall 310b is disposed at an outer diameter. Accordingly, 310b may be a sidewall formed by the outer sidewall 201 of seed meter 210 or the first, second, third, and/or fourth ridges 218, 220, 222, and 224, respectively. Further, the direction of rotation of metering device 202, in Fig. 7, is coming out of the page. In an example, a cell that is undersized relative to seed width or thickness may result in an oversized seed not exiting cleanly. As such, in this implementation, a slight wall relief 504 can be disposed below the top portion or rim of one of the cell walls 310a (e.g., the inner side) to limit the size of seeds that can enter the cell 204. In this implementation, this relief 504 near the top rim 504 of the cell 204 allows freedom for the seeds to shift once in the cell 204, thereby improving clean release at exit while maintaining desired orientation

Fig. 8 illustrates the seed exit portion 214 of the seed meter 200. The seed exit portion 214 includes a seed exit 506, which has a geometry that mimics or is parallel to the cell 204 geometry. In this way, as seeds pass over and into the exit 506, the seed does not rotate and generally maintains its orientation. The vacuum groove 508 can be disposed in the floor proximate of the seed exit portion 214 and below the cells 204 of the metering element 202. In some implementations, the shape and size of the groove 508 can be configured to accommodate the tip of the seed to keep it engaged. A vacuum can be applied to the groove 508 to hold and/or pull seed tips towards a desired orientation just prior to release. Further, a series of agitation features 510 can be placed in the meter floor below the cells 204 of the metering element 202. These agitation features 510 can help agitate (e.g., wiggle) the seeds prior to the seed exit 506. The agitation can free seeds that may otherwise be wedged or jammed in cells 204. Additionally, the vacuum applied to the groove 508 can help keep the seeds oriented tip down during the agitation.

In one aspect, the seed exit portion 214 can include one or more ejection components that facilitate ejection of the seed from the metering element 202. That is, instead of using merely gravity to eject the seed, a device may be deployed in the meter to mechanically eject the seed. A compliant cell wall 310 can allow exit assist mechanisms to force slightly oversized or jammed seeds out of the cell. Low friction cell walls 310 can improve seed exit. The cell wall 310 can contain a slight draft (i.e. wider bottom than top to improve seed exit). Further, the ejection component can be used to time the ejection to match a desired planting schedule distance between seeds, in accordance with planter speed.

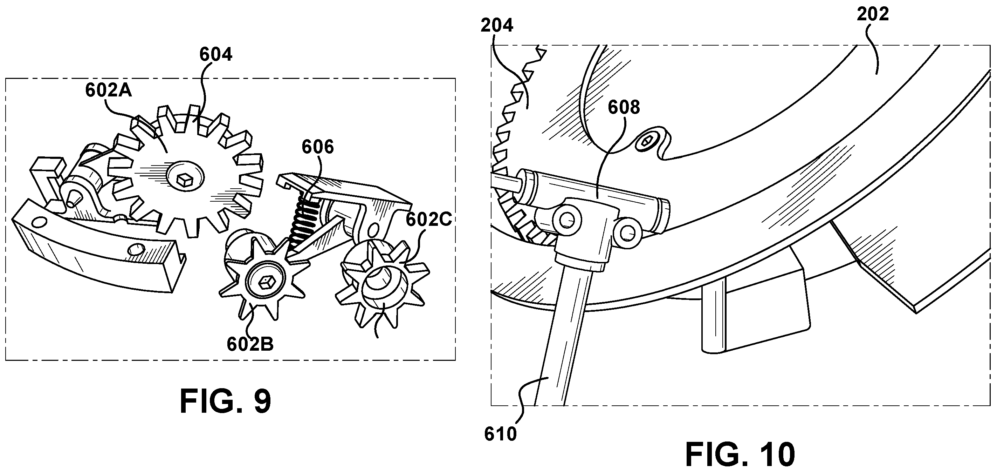

In some implementations, as illustrated in Fig. 9, 10, 11, and 12 illustrate alternate methods and systems that may be used to displace the seed from the orienting meter. In Fig. 9, an ejector wheel 602 can be disposed over the metering element 202. Various sizes and configurations are illustrated 602a, 602b, 602c. Teeth 604 on the ejector wheel 602 can be sized and shaped to facilitate mechanical ejection of the seed, based on the size, shape and speed of the cells 204 during operation. A spring 606 can help reduce chances of seed jams in the cells 204. Further, the wheels can be driven by the movement of the metering element, such that the teeth engage each cell wall to continue rotation. This makes the wheels easy to adjust, and easy to change based on height and spacing of cells. Additionally, high speed metering is operable, due to the metering element driving the wheel 602.

In Fig. 10, an air ejector 608 can be disposed over the cells 204 of the metering element 202. An air supply 610 can provide compressed air that acts as a force against the seeds as the cells 204 to rotate beneath the air ejector 608. The air ejector 608 can be effective to dislodge slightly stuck seeds and keep seed spacing more consistent. Further, seed orientation can be maintained. Additionally, the force of the air applied can be adjusted to vary the speed of the seed exit. Additionally, the flow of air can be synchronized on with the presence of seed below the air supply 610 and otherwise metered off to reduce power consumption.

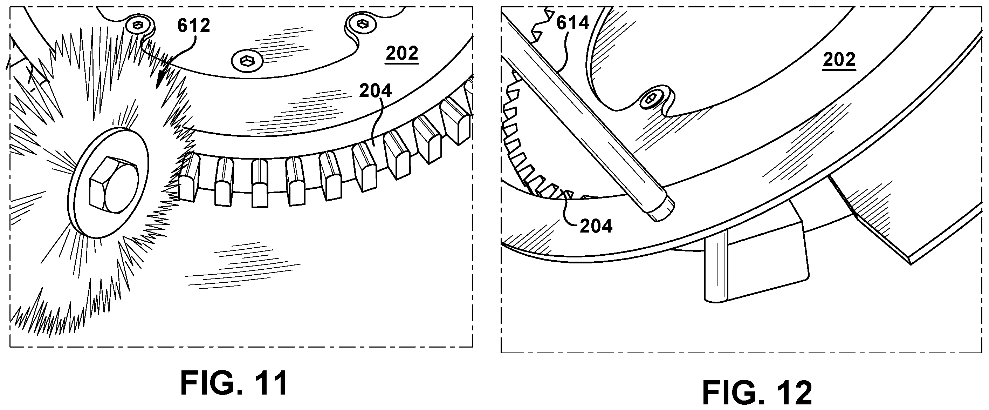

In Fig. 11, a brush ejector 612 can be disposed over the cells 204 of the metering element 202. The brush 612 can be mechanically rotated, such as by a separate motor (not shown) or linked to the metering element 202 drive train. The brush 612 can dislodge seeds from the cells 204 as it rotates. The speed of the seed exit can be adjusted by adjusting the motor speed. Using the brush 612, seed spacing can be more consistent and modifying and/or replacing the brush profile is available.

In Fig. 12 a punch ejector 614 can be disposed over the cells 204 of the metering element 202. The punch 614 can extend a rod (e.g., or the like) that is activated mechanically, pneumatically, or electrically to drive the rod against a seed in the cell 204. The velocity and timing of the extension can be programmatically adjusted or may be based on the rotation speed of the metering element 202.

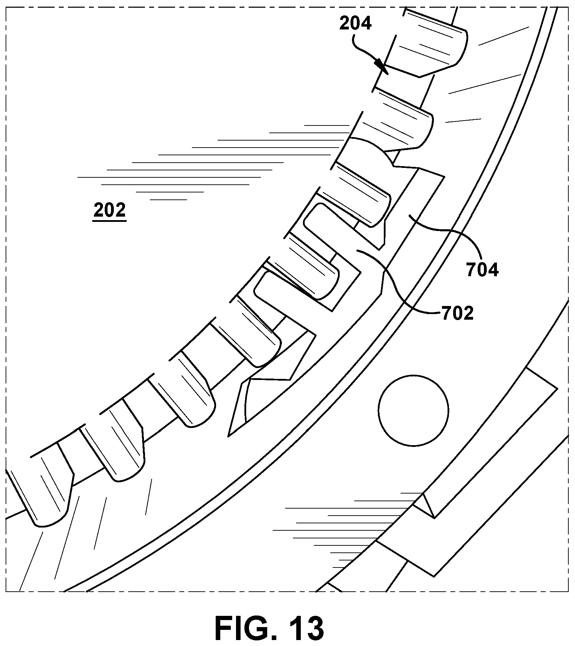

Fig. 13 illustrates another alternate system and technique for ejecting seeds from the metering element 202, while also providing a drive mechanism for the metering element 202. A helix drive 702 can be disposed proximate the metering element 202 (e.g., in a wall proximate the element 202), such that drive teeth 704 meshedly engage with the cells 204 of the element 204. The helix drive 702 can comprise a worm-type gear with the drive teeth 704 arranged in a spiral around the drive 702. The helix drive 702 can be powered by a motor (not shown) that can further be controlled, such as for speed. In this way, the motor could drive the helix drive 702, which can in turn drive the metering element 202. As such, a second motor may not be needed to drive the metering element 202. Additionally, the drive teeth 704 can be used to eject seeds from the cells as the helix drive 702 can be placed proximate the seed exit for this purpose. In some implementations, the pitch of the drive teeth 704 can be oriented to accommodate the drive of the metering element 202 without the need for additional torque from the motor.

Additionally, in some implementations, a helix-shaped device (e.g., like the drive 702) may be merely used to eject seeds from cells 204, and not to drive the meter. The helix 702 can be made of a compliant material such as a nylon brush to avoid jams in cases where seeds cannot be easily forced down and out of cells 204. A compliant helix such as a brush has advantages over a brush wheel in that a compliant helix can be made to only pass through cells 204, mitigating interaction with the exit assist mechanism and cell walls reduces wear on the cell walls and exit assist mechanism. Additionally, in some implementations, a helix (e.g., 702) can be located downstream of the seed exit and used as a seed ejector to remove stuck seeds (e.g., seeds that do not successfully exit the meter) from cells 204 that otherwise inhibit filling of the cell with a new seed during subsequent passes through the seed pool 206. In this example, a helix rotates such that seeds stuck in cells are pushed up and out of cells 204. In some cases, seed shape can resemble a wedge (e.g., thinner at the bottom and wider at the top). In this example, such seeds can fall partially into cells before becoming stuck. Because it is difficult to drive such seeds down and out of cells without compliance in cell walls 310, it may be easier to drive the seed up and out. In these implementations, an exit path can be incorporated to eject seeds from the seed meter rather than ejecting them back into the seed pool 206 only to become stuck again. In some implementations, the geometry of the helix can be configured such that rotation of the helix is generated by contact with cell walls 310, so an additional drive is not required.

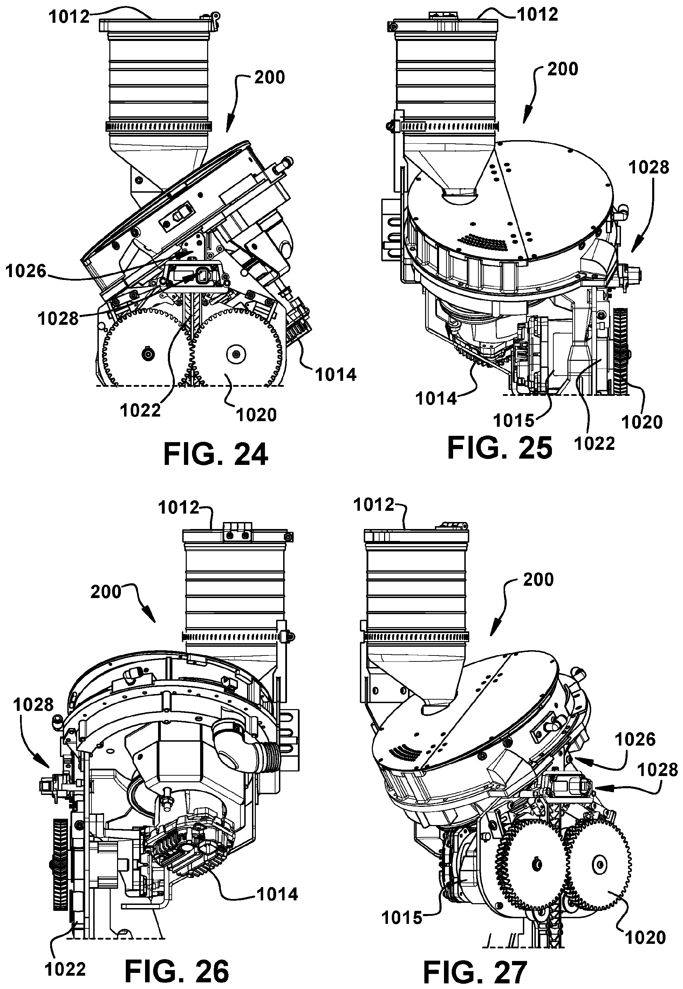

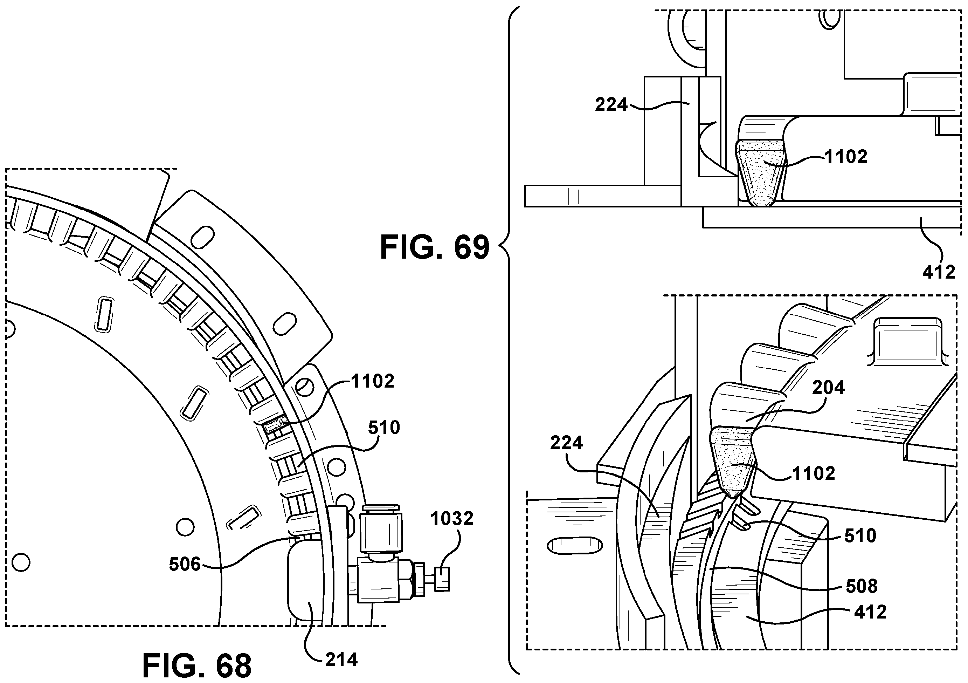

Turning now to Figs. 14-69, various features, implementations, and/or operations of the seed meter 200 are described. Fig. 14-18 depict various views of an exemplary, non-limiting implementation of a row unit 1000 on which the seed meter 200 may be deployed. Row unit 1000, as shown, include seed meter 200 having a hopper 1012 to deposit seed to seed pool 206. Row unit 1000 further includes an opener disc 1002, a gauge wheel 1004, closing wheel 1006, and a seed dispensing assembly 1008. The seed meter 200 (e.g. rotation of metering element 202 or other devices) may be driven by a motor 1014. The seed dispenser assembly 1008 may be driven by a motor 1015. The opener disc 1002 cuts an opening into the ground into which a seed is deposited with seed dispenser assembly 1008. The gauge wheel ensures the opener disc 1002 creates an opening having a desired depth for the seed. The closing wheel 1006 covers the opening after the seed have been deposited therein.

Fig. 14-18 further depict a furrow opener 1010, which may operate with or replace opener disc 1002. Furrow opener 1010 may create a furrow for the seed and may be positioned at a ground-proximate end of the seed dispensing assembly 1008. Furrow opener 1010 may be positioned just before (e.g. in a traveling direction) a location at which seed exits the seed dispensing assembly 1008.

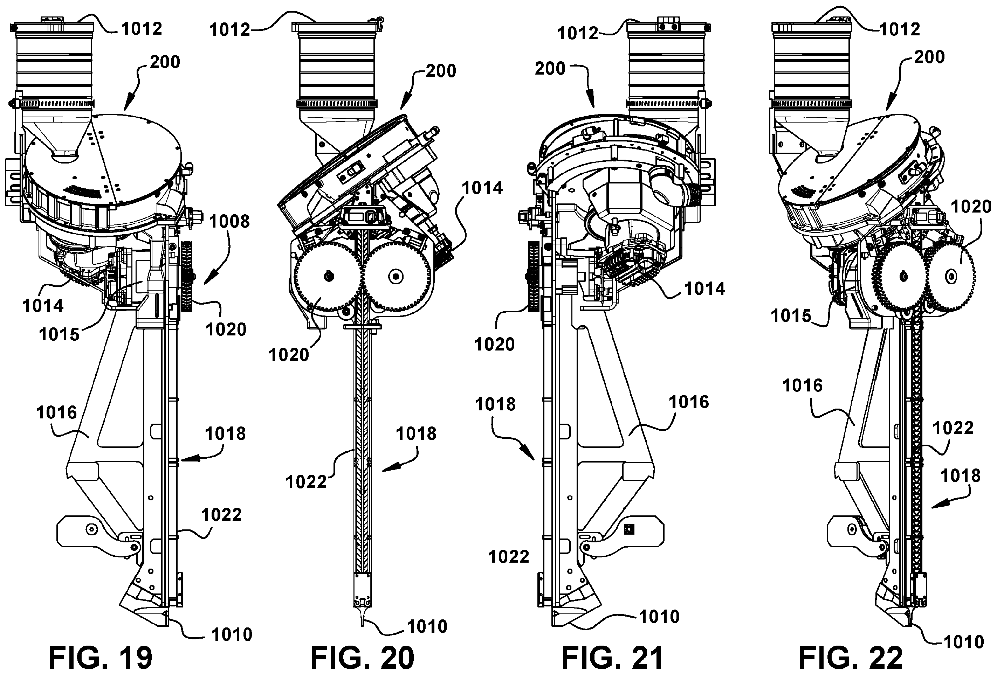

Figs. 19-27 depict a seed delivery system, including the seed meter 200 and the seed dispensing assembly 1008, separate from the row unit 1000. The seed delivery system can orient and dispense a seed in a desired orientation. The seed delivery system can include a frame 1016 to support the seed delivery assembly 1008 and seed meter 200. The frame 1016 further facilitates attachment of the seed delivery system to row unit 1000. As shown in Figs. 19-27, the seed dispensing assembly 1008 includes a seed delivery channel 1018 through which a seed, received from meter 200 in a desired orientation, travels before being deposited into a furrow opened in the ground. The seed delivery channel 1018 maintains the seed in the desired orientation.

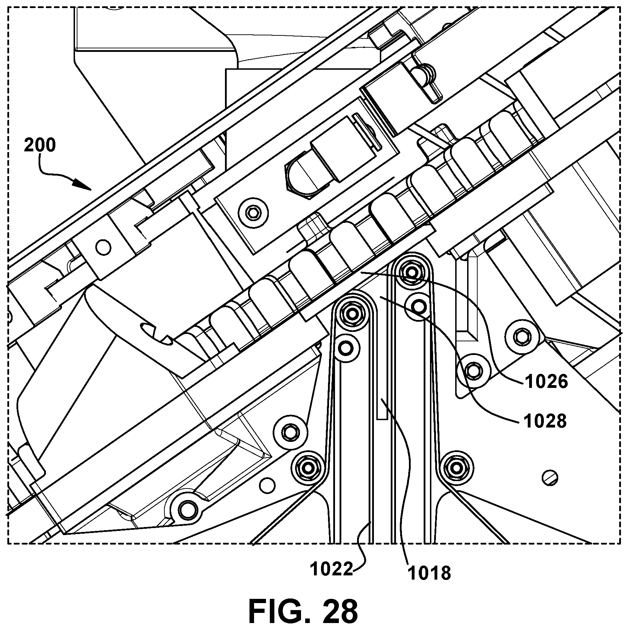

The seed delivery channel 1018 may be partially formed by belts 1022 of the seed dispensing assembly 1008. In one implementation, a pair of belts may be supported in tension by rollers and the seed delivery channel 1018 is formed between the belts. Powered rollers 1020 coupled to motor 1015 cause the belts 1022 to move. In particular, the belts 1022, in the portion defining the seed delivery channel 1018, travels in a downward direction from the seed meter 200 to the ground, which is proximate to furrow opener 1010 during operation. Fig. 28 depicts a portion of the seed delivery system where the seed meter 200 interacts with the seed dispensing assembly 1008. As shown in Fig. 28, the seed delivery channel 1018 is defined by belts 1022. At a top portion of the belts 1022 is a seed receiving location 1028 where a seed is deposited from the seed meter 200 (e.g. in a desired orientation such as tip-down) via a chute 1026 (e.g. coupled to seed exit 506). According to various aspects, the belts 1022 are arranged relative to seed meter 200 to maintain seed orientation. For example, as shown in Fig. 28, the left belt 1022 is positioned lower than the right belt 1022 at the seed receiving location 1028. Chute 1026, in an aspect, aligns with seed exit 506. When a cell 204 rotates over the seed exit 506, the seed drops through the seed exit 506 and chute 1026. The seed is caught by the belt 1022 at the seed receiving location 1028 and conveyed downward to the ground for deposition into a furrow.

Figs. 29-32 illustrate seed meter 200 separate from the seed dispensing assembly 1008. In Figs. 29-32, seed meter 200 is depicted with hopper 1012 and lid 1024 (see Fig. 23). Figs. 29-32 illustrate the external arrangement of first stage 230, second stage 212, and seed exit 506 as described above. Figs. 29-32 further show the outer side wall 201 of the seed meter 200. As described above, an inner surface of the outer side wall 201 forms a wall off the cells 204, in portions of the seed meter 200.

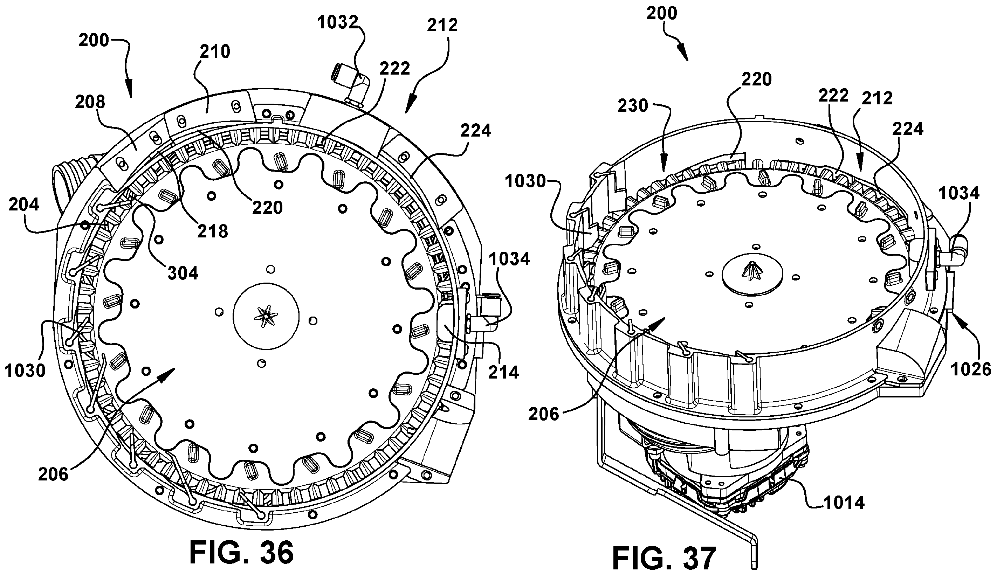

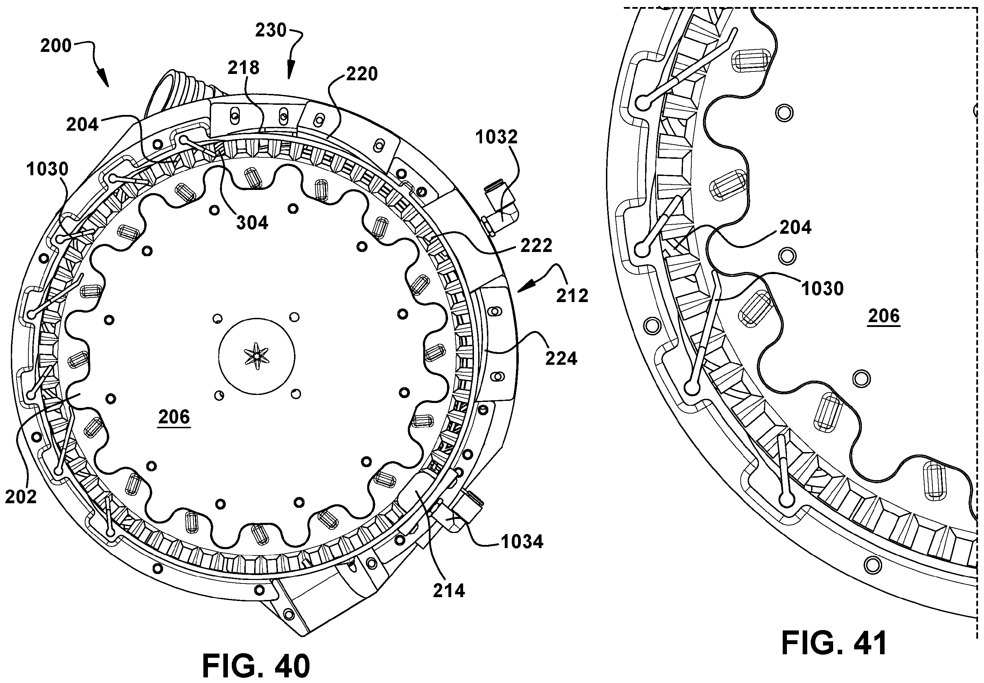

Figs. 33-35 depict seed meter 200 without lid 1024. Figs. 33-35 illustrate a general arrangement between an exit of hopper 1012 and seed meter 200 and, particularly, features such as the first stage 230 and second stage 212. The exit of hopper 1012 generally aligns with seed pool 206, in some implementations. Figs. 36-39 depict the seed meter 200 without lid 1024 and without hopper 1012. Fig. 40 shows seed meter 200 without lid 1024 and with the cells 204 ghosted. Fig. 41 depicts a portion of seed meter 200 proximate to seed pool 206. Fig. 42 depicts a portion of seed meter 200 near the first stage 230 and second stage 202, but with cells 204 hidden.

Referencing these figures, paddles 1030 are shown. Paddles 1030 are one implementation of singulation component 226 described above. Paddles 1030 may further operate to encourage seeds from seed pool 206 into cells 204. Inlets 1032 and 1034 are shown along a circumference of seed meter 200. Inlets 1032 and 1034 provide connection points for an air supply to input air into seed meter 200 to operate air knife 402 and/or air ejector 608, according to some examples.

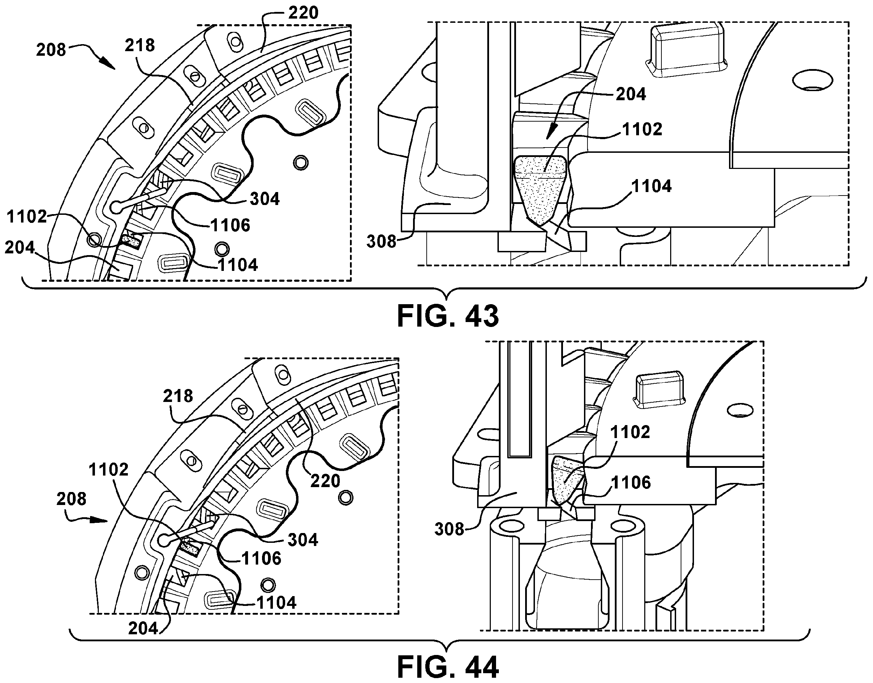

Turning now to Figs. 43-69, operation of seed meter 200 is illustrated. In particular, Figs. 43-69 illustrate a seed 1102 moving through the first stage 230 and the second stage 212. Accordingly, Figs. 43-69 depict seed 1102 being manipulated into a desired orientation prior to reaching seed exit portion 214.

Fig. 43 illustrates top view and partial cutaway perspective view of a seed 1102 at a first portion of first stage selector portion 208. Fig. 44 illustrates a top view and a partial cutaway perspective view of the seed 1102 at a second portion of first stage selector portion 208. As described above, the first stage selector portion 208 operates to engage seeds that fall into cells 204 in a tip-down orientation. The floor 302 in the first stage selector portion 208 includes slits 1104 and 1106 just upstream of the first ridge 218. The slits 1104 and 1106 engage a tip of seed 1102 when the seed 1102 is in a tip-down orientation. In contrast, a seed in a tip-up orientation, with the relatively wider base portion on floor 302 will not engage slits 1104 and 1106. As shown in Fig. 44 particularly, slit 1106 partially deflects the tip of seed 1102 radially outward.

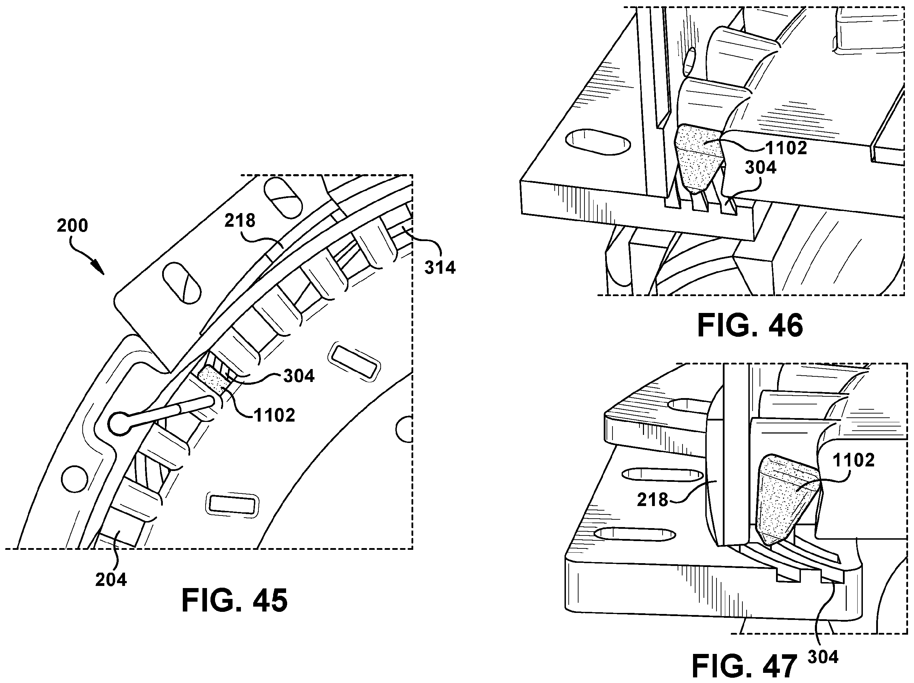

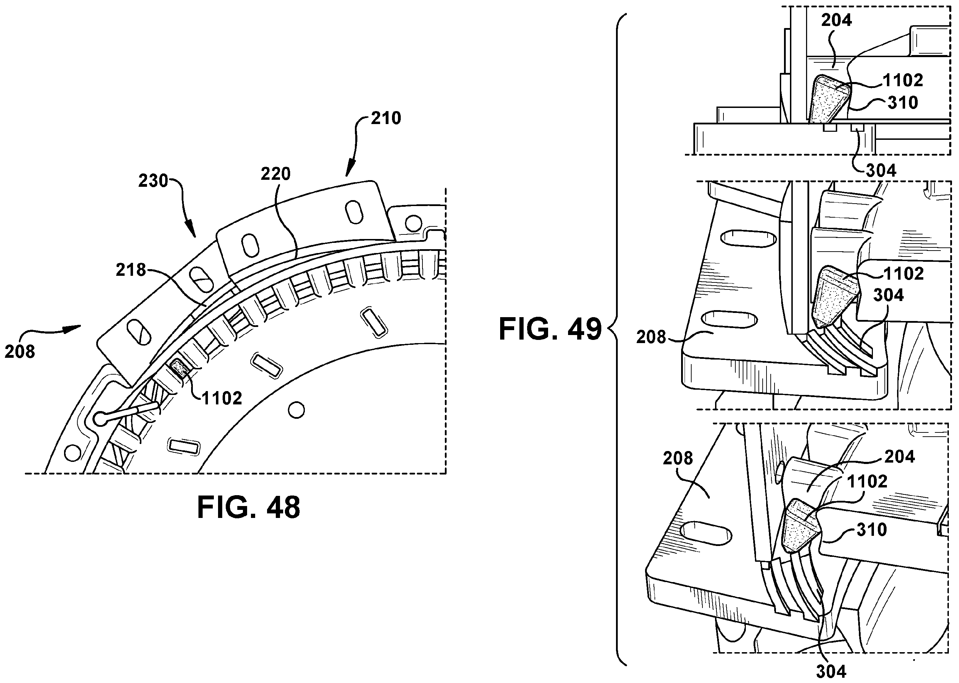

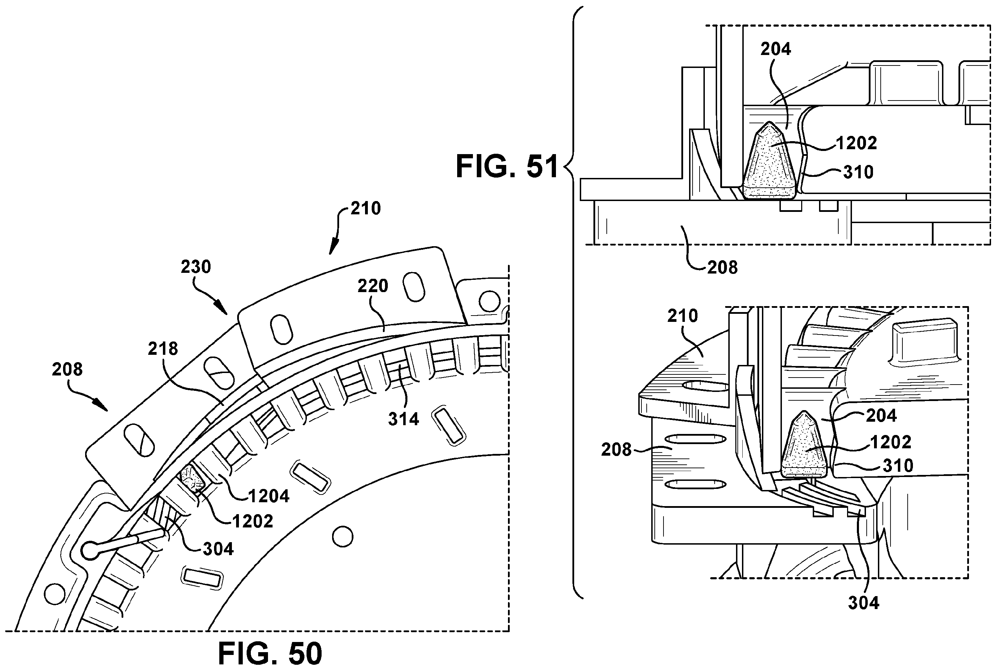

Figs. 45-49 illustrate seed 1102 (e.g. in a tip-down orientation) at a beginner part of first stage selector portion 208. As shown, the tip of seed 1102 engages grooves 304 and follow the path of the grooves 304. As shown in Figs. 46 and 47, the tip of the seed 1102 deflects radially outward by following grooves 304 from an initial part of the groove path (Fig. 46) to a terminal part of the groove path (Fig. 47). Figs. 48 and 49 illustrate seed 1102 just past grooves 204 and prior to engaging first ridge 218. Figs. 50 and 51 illustrate a seed 1202 in a tip-up orientation bypassing grooves 304 as described above.

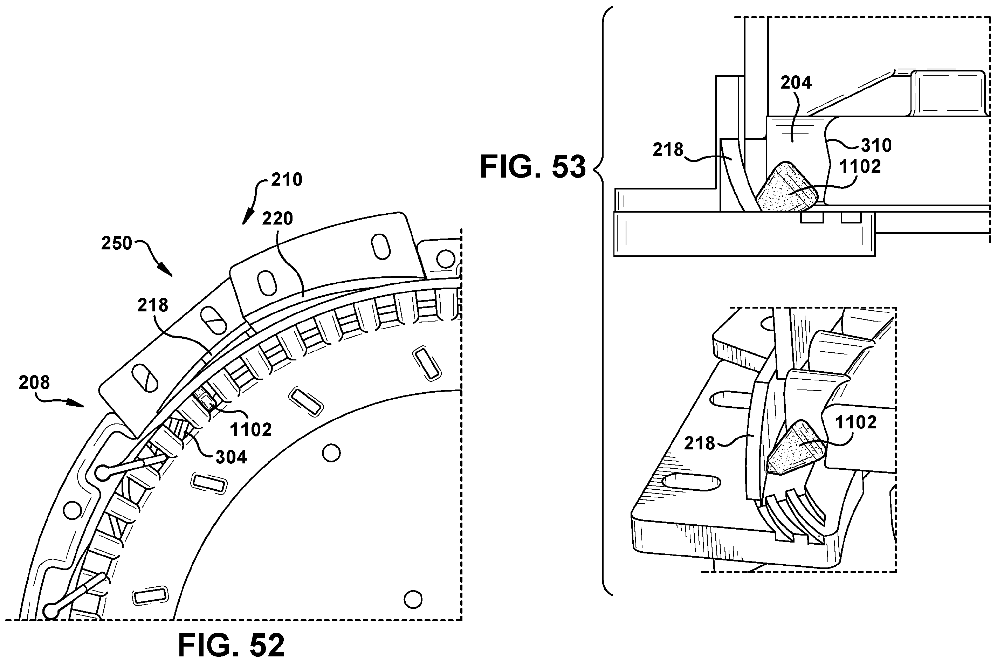

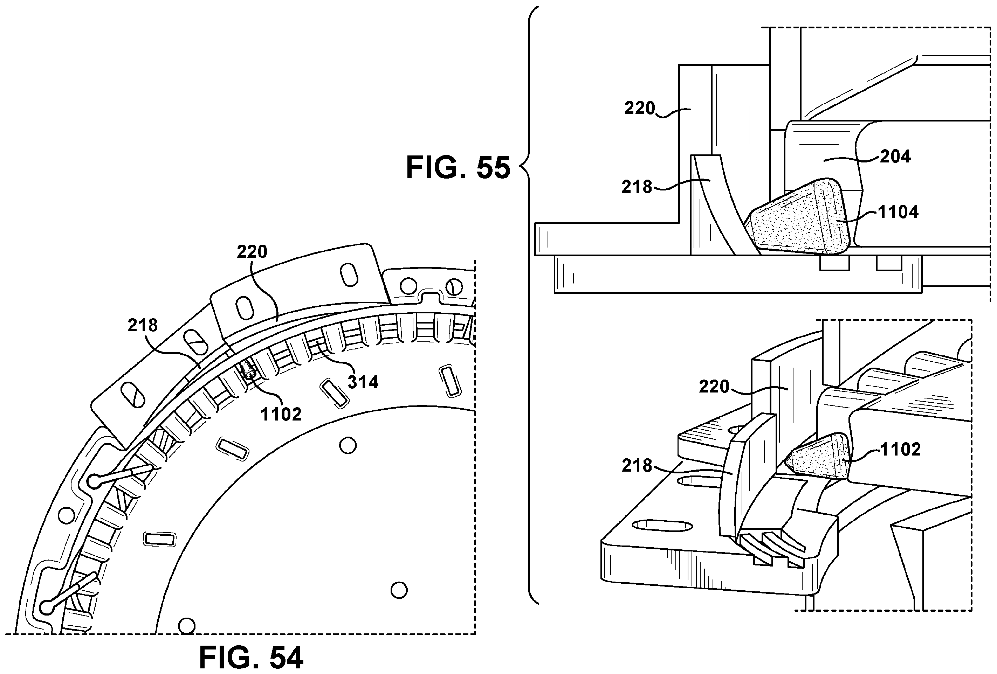

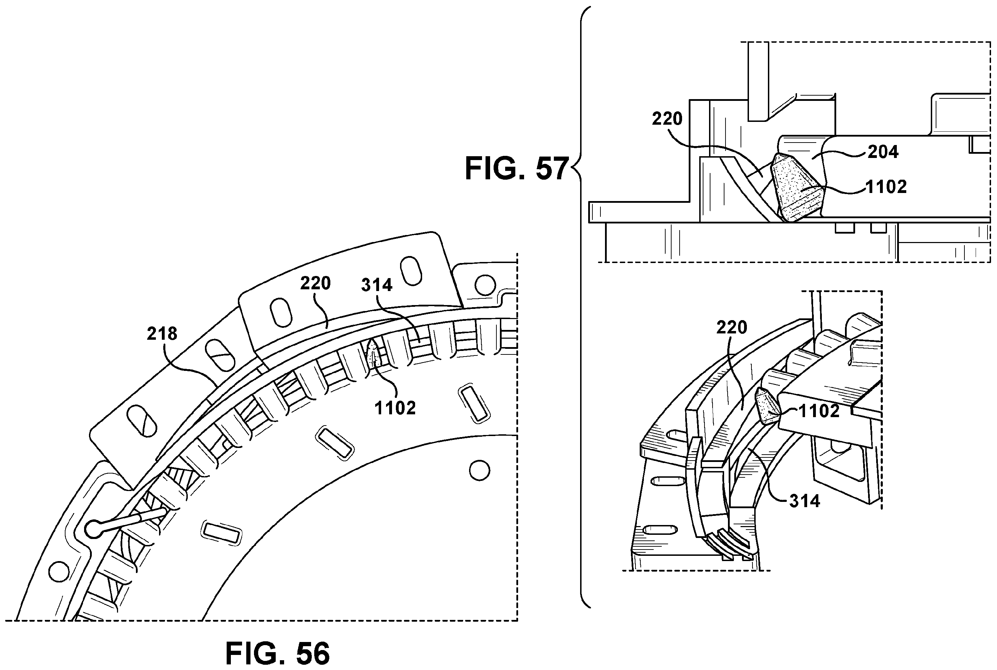

As the seed 1102 passes grooves 208, the seed 1102 begins to rotate (e.g. tip deflects radially outward) as shown in Figs. 52 and 53 until seed 1102 transitions to a tip-horizontal orientation at a start of the first stage flip portion 210 as shown in Figs. 54 and 55. As described above, the first stage flip portion 210 includes the second ridge 220 having a ramp portion to rotate a tip-horizontal seed to a tip-up orientation. As shown by the progression of Fig. 54 to Fig. 57, the tip of seed 1102 follows the ramp of the second ridge 220 up until seed 1102 rotates into the tip-up orientation. Figs. 56 and 57 show slit 314 through which a vacuum may be applied in some examples to help stabilize seed 1102 during the rotation.

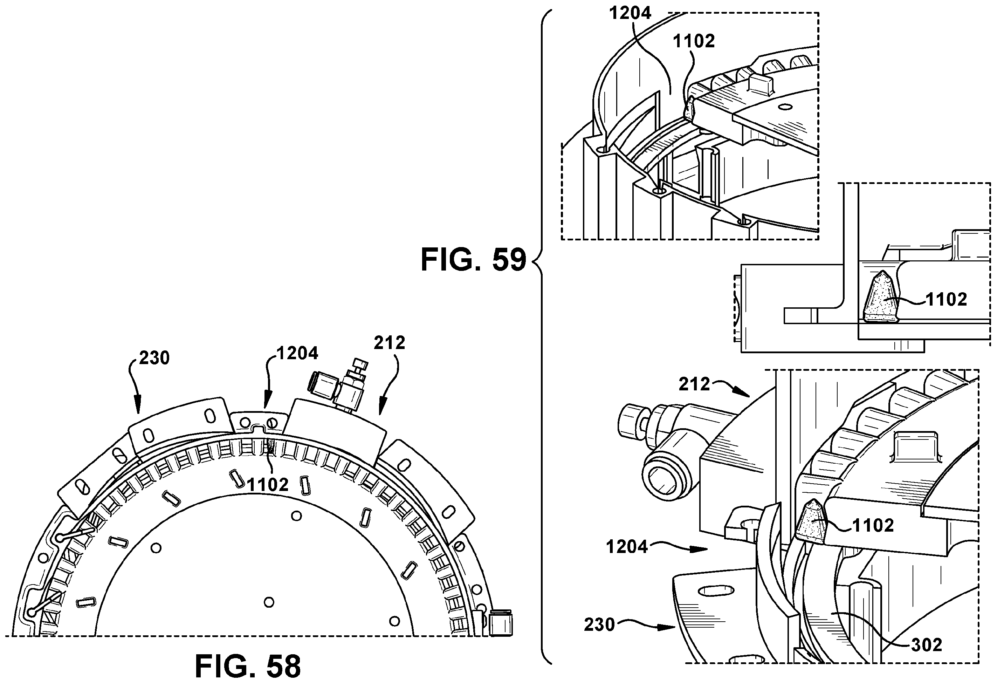

Turning to Figs. 58 and 59, the seed 1102 is illustrated in a transition portion 1204 between first stage 230 and second stage 212. In the transition portion 1204, seed 1102 is in a tip-up orientation, whether by action of the first stage 230 or because seed 1102 initially fell into cell 204 in this orientation. The seed 1102 continues to travel via rotation of metering device 202 until an initial point 1206 of the second stage 212 as shown in Figs. 60 and 61. The initial point 1206 includes trough 404 where the tip-up oriented seed 1102 falls down to base 406, which is lower than floor 302.

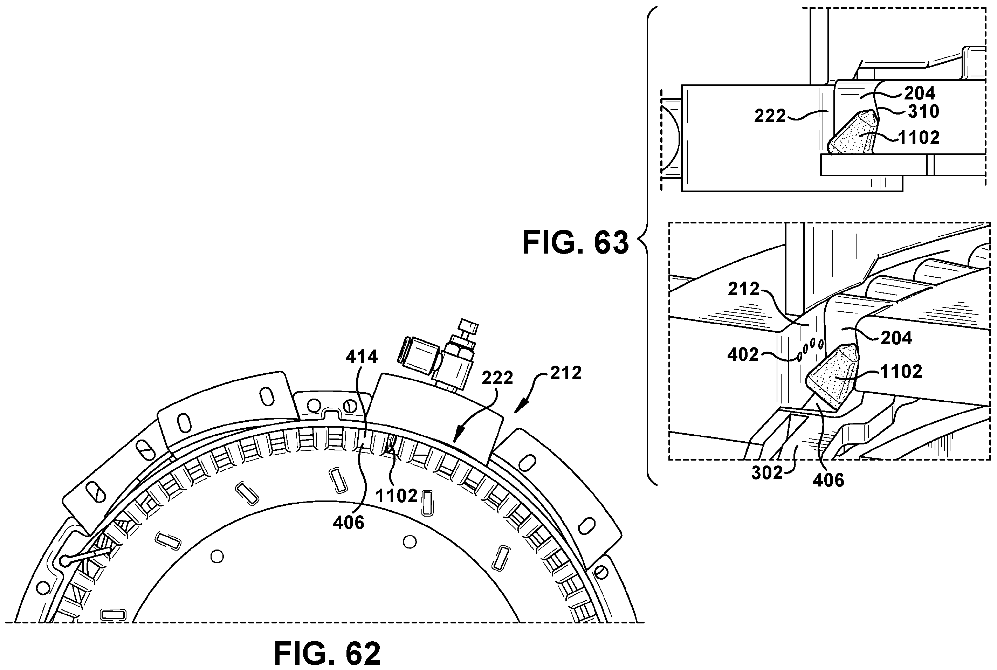

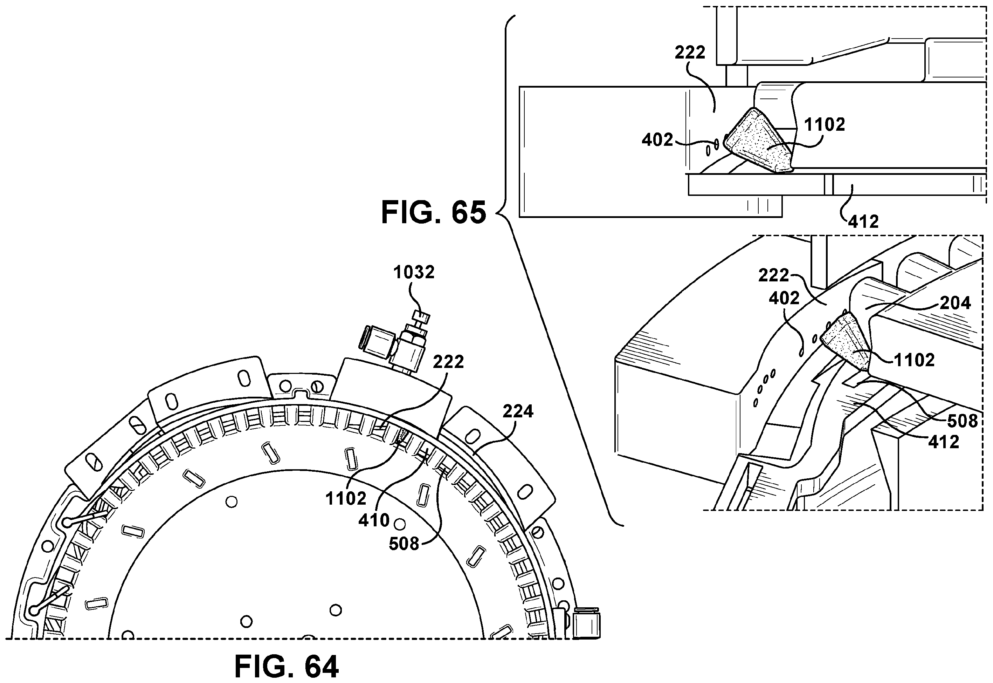

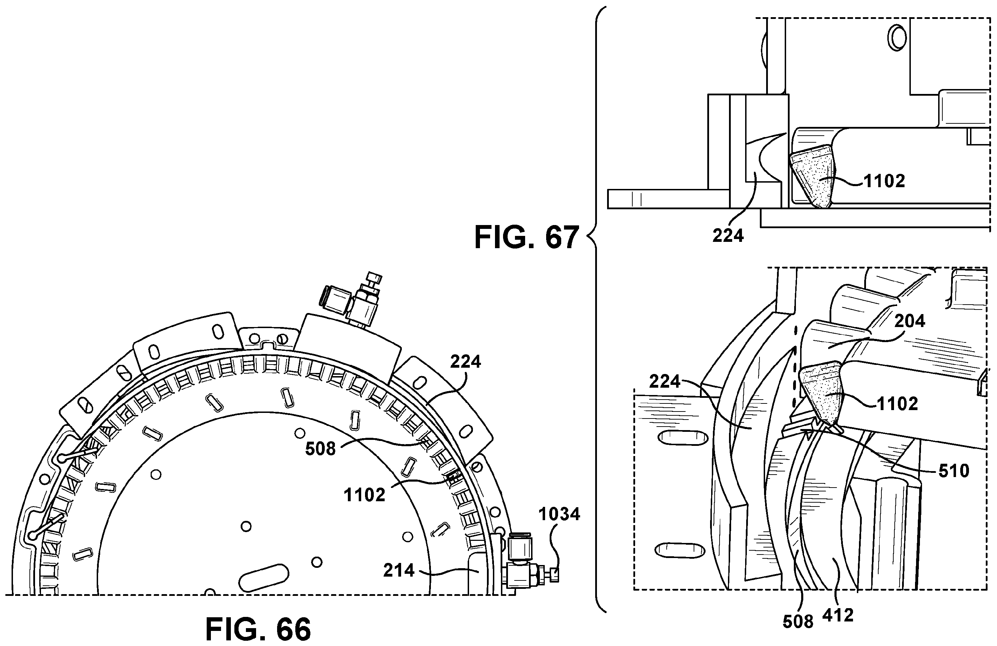

Turning to Figs. 62 and 63, the seed 1102, after falling into trough 404, begins to rotate from a tip-up orientation. Specifically, as shown in Fig. 63, the tip of seed 1102 rotates radially inward. Air knife 402, in some implementations, may be utilized to facilitate the inward deflection. As shown in Figs. 64 and 65, a base of seed 1102 engages the third ridge 222 and follows the ramp upward. As depicted in the figures, the seed 1102 begins to rotate to a tip-down orientation. As described above, and illustrated in Figs. 66 and 67, the seed 1102 continues the rotation through engagement with the fourth ridge 224. As shown in Figs. 67-69, after rotation, the tip of the tip-down seed 1102 may engage with a slit 508 (through which a vacuum may be applied in some implementations) during rotation and, further, may encounter agitation elements 510 after passing the second stage 212. The tip-down oriented seed 1102 may continue until reaching the seed exit 214 as described above.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for seed dispensing and/or delivery have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for seed dispensing and/or delivery. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication.

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

**In** summary, various embodiments and examples of systems and methods for seed dispensing and/or delivery have been disclosed. Although the systems and methods for seed dispensing and/or delivery have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined only by a fair reading of the claims that follow.

Embodiments of the invention can be described with reference to the following numbered clauses, with preferred features laid out in dependent clauses:
1. A seed orientation device for orienting a seed in a seed planter, comprising:
   a metering element comprising a plurality of evenly spaced, peripherally disposed metering cells, respective metering cells sized and shaped to operably receive a single seed;
   a tip down orientation stage configured to rotate the seed in the respective cells to a tip down orientation; and
   a seed exit stage configured to release the seed from the metering element in the tip down orientation.
2. The device of clause 1, comprising a tip up orientation stage disposed upstream from the tip down orientation stage, the tip up orientation stage configured to rotate the seed in the respective cells to a tip up orientation.
3. The device of clause 2, the tip up orientation stage comprising:
   a first stage selector portion configured to allow a seed in a tip up orientation to remain in a tip up orientation, and to begin orientation of a seed in a tip down orientation toward a tip up orientation; and
   a first stage flip portion downstream from the first stage selector portion configured to complete a transition of a seed in the tip down orientation to a tip up orientation.
4. The device of clause 2, the tip up orientation stage comprising one or more grooves disposed in a floor plate beneath the respective cells of the metering element, the one or more grooves sweeping in an arc radially outward from upstream to downstream.
5. The device of clause 1, the tip down orientation stage comprising a ramp that increases in height from upstream to downstream, and configured to receive a base of the seed thereby turning the seed from tip up to tip down orientation as the seed traverses the ramp.
6. The device of clause 1, the tip down orientation stage comprising a vacuum provided beneath a floor plate of the metering element to operably draw the tip of the seed downward.
7. The system of clause **1,** the metering element comprising a cone shape that is higher in the center of the metering element such that seeds tend to translate toward the edges of the metering element.
8. The system of clause 1, respective metering cells comprising parallel cells walls rising toward an outer perimeter of the metering element, a distance between the parallel cell walls sized to accommodate merely a shorter width of a seed and exclude a longer width of the seed.
9. The device of clause **1,** the metering element operably rotating in a clockwise direction with a floor plate of the metering element disposed beneath or behind respective cells, and remaining stationary with respect to the metering element.
10. The device of clause 9, comprising a vacuum applied beneath the floor plate thereby drawing a seed toward the floor plate where a hole, a via, or a groove, is disposed in the floor plate.
11. The device of clause 1, the seed exit stage comprising a seed exit comprising an opening that is substantially similar in size and shape to that of a bottom of the metering cells of the metering element, such that as the seed passes over the seed exit the seed maintains it orientation from the metering cell to the seed exit.
12. The device of clause 11, the seed exit stage comprising a vacuum groove in the floor plate shaped and sized to receive and hold the tip of the seed as it translates to the seed exit.
13. The device of clause 11, the seed exit stage comprising an agitation feature in the floor plate that is configured to agitate the seed while in the tip down orientation as it translates to the seed exit.
14. A seed orientation apparatus for orienting a seed in a seed planter comprising:
   a metering element comprising a plurality of peripherally disposed metering cells, the metering cells are sized and shaped to respectively receive an individual target seed in a first orientation, the metering element operably rotating about a central axis;
   a floor plate disposed beneath or under the metering element, the floor plate operably remaining stationary with regard to the metering element such that a target seed translates along the floor plate as the metering element rotates;
   a tip down orientation stage comprising a first ramp rising radially outward from upstream to downstream, and that is configured to move a seed from a tip up orientation to a tip down orientation in the metering cell in which it is disposed; and
   a seed exit stage configured to release the seed from the metering cell of the metering element in the tip down orientation.
15. The device of clause 14, comprising a tip up orientation stage disposed upstream from the tip down orientation stage, the tip up orientation stage comprising a second ramp rising radially outward from upstream to downstream, and that is configured to move a seed from a tip down orientation to a tip up orientation in the metering cell in which it is disposed.
16. The device of clause 15, the tip up orientation stage comprising:
   a first stage selector portion configured to allow a seed in a tip up orientation to remain in a tip up orientation, and to begin orientation of a seed in a tip down orientation toward a tip up orientation; and
   a first stage flip portion downstream from the first stage selector portion configured to complete a transition of a seed in the tip down orientation to a tip up orientation.
17. The device of clause 14, comprising a vacuum provided beneath a floor plate of the metering element to operably draw the tip of the seed downward in the metering cell.
18. The system of clause 14, respective metering cells comprising configured to merely allow a seed of a desired dimension to fit inside the metering cell, and the first orientation of the seed comprising respective flat sides of the seed to be disposed parallel to walls of the metering cell.
19. The device of clause 14, the seed exit stage comprising a seed exit comprising an opening that is substantially similar in size and shape to that of a bottom of the metering cells of the metering element, such that as the seed passes over the seed exit the seed maintains it orientation from the metering cell to the seed exit.
20. A seed orienting apparatus for orienting a seed in a seed planter system, wherein the system comprises a seed pool for collecting seeds and dispensing them to the apparatus, a singulation component that singulates the seeds for the apparatus, a seed delivery component that receives an oriented seed from the apparatus and delivers it to the ground for planting, the apparatus comprising:
   a metering element comprising a plurality of peripherally disposed metering cells, the metering cells are sized and shaped to respectively receive an individual target seed in a first orientation, the metering element operably rotating about a central axis;
   a floor plate disposed beneath or under the metering element, the floor plate operably remaining stationary with regard to the metering element such that a target seed translates along the floor plate as the metering element rotates;
   a first seed flip stage comprising a tip up orientation component, the first seed flip stage comprising:
      a first stage selector portion configured to allow a seed in a tip up orientation to remain in a tip up orientation, and to begin orientation of a seed in a tip down orientation toward a tip up orientation; and
      a first stage flip portion downstream from the first stage selector portion configured to complete a transition of a seed in the tip down orientation to a tip up orientation
   a second seed flip stage comprising a tip down orientation component comprising a first ramp rising radially outward from upstream to downstream, and that is configured to move a seed from a tip up orientation to a tip down orientation in the metering cell in which it is disposed; and
   a seed exit stage configured to release the seed from the metering cell of the metering element in the tip down orientation, the seed exit stage comprising a seed exit comprising an opening that is substantially similar in size and shape to that of a bottom of the metering cells of the metering element, such that as the seed passes over the seed exit the seed maintains it orientation from the metering cell to the seed exit.

## Claims

1. A seed orientation device (200) for orienting a seed in a seed planter, comprising:
a metering element (202) comprising a plurality of evenly spaced, peripherally disposed metering cells, respective metering cells sized and shaped to operably receive a single seed;
a tip down orientation stage (212) configured to rotate the seed in the respective cells to a tip down orientation; and
a seed exit stage (214) configured to release the seed from the metering element in the tip down orientation.

2. The device of claim 1, further comprising a tip up orientation stage (230) disposed upstream from the tip down orientation stage, the tip up orientation stage configured to rotate the seed in the respective cells to a tip up orientation,
wherein the tip up orientation stage comprises:
a first stage selector portion (208) configured to allow a seed in a tip up orientation to remain in a tip up orientation, and to begin orientation of a seed in a tip down orientation toward a tip up orientation;
a first stage flip portion (210) downstream from the first stage selector portion configured to complete a transition of a seed in the tip down orientation to a tip up orientation; and
one or more grooves (304) disposed in a floor plate beneath the respective cells of the metering element, the one or more grooves sweeping in an arc radially outward from upstream to downstream.

3. The device of claim 1 or claim 2, the tip down orientation stage comprising a ramp that increases in height from upstream to downstream, and configured to receive a base of the seed thereby turning the seed from tip up to tip down orientation as the seed traverses the ramp.

4. The system of any one of the preceding claims, the metering element comprising a cone shape that is higher in the center of the metering element such that seeds tend to translate toward the edges of the metering element.

5. The system of any one of the preceding claims, respective metering cells comprising parallel cells walls rising toward an outer perimeter of the metering element, a distance between the parallel cell walls sized to accommodate merely a shorter width of a seed and exclude a longer width of the seed.

6. The device of any one of the preceding claims, the metering element operably rotating in a clockwise direction with a floor plate of the metering element disposed beneath or behind respective cells, and remaining stationary with respect to the metering element.

7. The device of any one of the preceding claims, further comprising a vacuum applied beneath the floor plate thereby drawing a seed toward the floor plate where at least one of a hole, via, or groove is disposed in the floor plate.

8. The device of any one of the preceding claims, the seed exit stage comprising a seed exit comprising an opening that is substantially similar in size and shape to that of a bottom of the metering cells of the metering element, such that as the seed passes over the seed exit the seed maintains it orientation from the metering cell to the seed exit.

9. The device of the preceding claims, the seed exit stage comprising a vacuum groove in the floor plate shaped and sized to receive and hold the tip of the seed as it translates to the seed exit.

10. The device of the preceding claims, the seed exit stage comprising an agitation feature in the floor plate that is configured to agitate the seed while in the tip down orientation as it translates to the seed exit.

11. A seed orientation apparatus (200) for orienting a seed in a seed planter comprising:
a metering element (202) comprising a plurality of peripherally disposed metering cells, the metering cells are sized and shaped to respectively receive an individual target seed in a first orientation, the metering element operably rotating about a central axis;
a floor plate (202) disposed beneath or under the metering element, the floor plate operably remaining stationary with regard to the metering element such that a target seed translates along the floor plate as the metering element rotates;
a tip down orientation stage (212) comprising a first ramp rising radially outward from upstream to downstream, and that is configured to move a seed from a tip up orientation to a tip down orientation in the metering cell in which it is disposed; and
a seed exit stage (214) configured to release the seed from the metering cell of the metering element in the tip down orientation.

12. The device of claim 11, further comprising a tip up orientation stage (230) disposed upstream from the tip down orientation stage, the tip up orientation stage comprising a second ramp rising radially outward from upstream to downstream, and that is configured to move a seed from a tip down orientation to a tip up orientation in the metering cell in which it is disposed,
wherein the tip up orientation stage comprises:
a first stage selector portion (208) configured to allow a seed in a tip up orientation to remain in a tip up orientation, and to begin orientation of a seed in a tip down orientation toward a tip up orientation; and
a first stage flip portion (210) downstream from the first stage selector portion configured to complete a transition of a seed in the tip down orientation to a tip up orientation.

13. The device of claim 11 or claim 12, comprising a vacuum provided beneath a floor plate of the metering element to operably draw the tip of the seed downward in the metering cell.

14. The system of any one of claims 11 to 13, respective metering cells comprising configured to merely allow a seed of a desired dimension to fit inside the metering cell, and the first orientation of the seed comprising respective flat sides of the seed to be disposed parallel to walls of the metering cell.

15. The device of any one of claims 11 to 14, the seed exit stage comprising a seed exit comprising an opening that is substantially similar in size and shape to that of a bottom of the metering cells of the metering element, such that as the seed passes over the seed exit the seed maintains it orientation from the metering cell to the seed exit.
